(19) Europäisches Patentamt
European Patent Office
Office européen des brevets

(11) EP 4 760 823 A2

(12) **EUROPEAN PATENT APPLICATION**

(43) Date of publication:
**17.06.2026 Bulletin 2026/25**

(21) Application number: **25220107.4**

(22) Date of filing: **02.12.2025**

(51) International Patent Classification (IPC):
***H01M 4/62*** *(2006.01)* ***H01M 4/13*** *(2010.01)*
***H01M 4/131*** *(2010.01)* ***H01M 4/139*** *(2010.01)*
***H01M 4/1391*** *(2010.01)* ***H01M 10/0525*** *(2010.01)*

(52) Cooperative Patent Classification (CPC):
**H01M 4/622; H01M 4/13; H01M 4/131; H01M 4/139; H01M 4/1391; H01M 4/62; H01M 4/625; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.12.2024 KR 20240183431**

(71) Applicant: **SAMSUNG SDI CO., LTD.**
**Yongin-si, Gyeonggi-do 17084 (KR)**

(72) Inventors:
- **CHANG, Mise**
  **17084 Yongin-si, Gyeonggi-do (KR)**
- **JEONG, Hyejeong**
  **17084 Yongin-si, Gyeonggi-do (KR)**
- **KIM, Chaeyoung**
  **17084 Yongin-si, Gyeonggi-do (KR)**
- **LEE, Jungmin**
  **17084 Yongin-si, Gyeonggi-do (KR)**
- **LEE, Kukjoo**
  **17084 Yongin-si, Gyeonggi-do (KR)**
- **KIM, Sundae**
  **17084 Yongin-si, Gyeonggi-do (KR)**
- **PARK, Sujin**
  **17084 Yongin-si, Gyeonggi-do (KR)**
- **JEONG, Euisoo**
  **17084 Yongin-si, Gyeonggi-do (KR)**

(74) Representative: **Bardehle Pagenberg Partnerschaft mbB**
**Patentanwälte Rechtsanwälte**
**Prinzregentenplatz 7**
**81675 München (DE)**

# (54) ELECTRODE FOR RECHARGEABLE LITHIUM BATTERY AND METHOD FOR MANUFACTURING THE SAME

(57) The present disclosure relates to an electrode for a rechargeable lithium battery, and a preparing method thereof. An electrode includes an electrode current collector, and an electrode active material layer on the electrode current collector. The electrode active material layer includes an active material and a first composite conductive material. The first composite conductive material includes a first carbon nanostructure and a first polymer chemically bonded to a surface of the first carbon nanostructure. The first polymer includes a first structural unit derived from a (meth)acrylic acid-based monomer or a salt thereof; a second structural unit derived from a (meth)acrylonitrile-based monomer; and a third structural unit derived from a zwitterionic monomer.

FIG. 7A

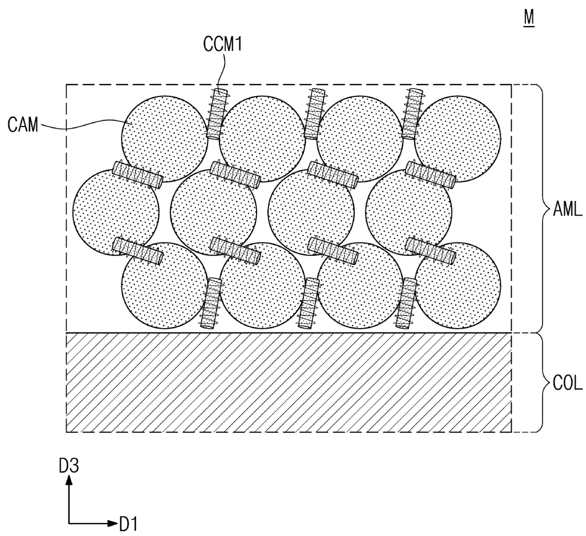


EP 4 760 823 A2

## Description

CROSS-REFERENCE TO RELATED APPLICATION

This European patent application claims priority to Korean Patent Application No. 10-2024-0183431 filed on December 11, 2024 in the Korean Intellectual Property Office, the disclosure of which is hereby incorporated by reference in its entirety.

BACKGROUND

The present disclosure relates to an electrode for a rechargeable lithium battery, and a method for manufacturing the electrode.

With increasing presence of battery-powered electronic devices such as, e.g., mobile phones, notebook computers, electric vehicles, and the like, the demand for rechargeable batteries with high energy density and large capacity has increased. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY

An example embodiment of the present disclosure includes an electrode having improved capacity characteristics and life characteristics, and a rechargeable lithium battery including the electrode.

An example embodiment of the present disclosure includes a method for manufacturing the electrode.

According to an example embodiment of the present disclosure, an electrode for a rechargeable lithium battery may include an electrode current collector, and an electrode active material layer on the electrode current collector. The electrode active material layer may include an active material and a first composite conductive material. The first composite conductive material may include a first carbon nanostructure and a first polymer chemically bonded to a surface of the first carbon nanostructure. The first polymer may include a first structural unit derived from a (meth)acrylic acid-based monomer or a salt thereof, and represented by Chemical Formula 1-1A or Chemical Formula 1-1B; a second structural unit derived from a (meth) acrylonitrile-based monomer, and represented by Chemical Formula 1-2; and a third structural unit derived from a zwitterionic monomer, and represented by Chemical Formula 1-3A or Chemical Formula 1-3B.

Chemical Formula 1-1A:

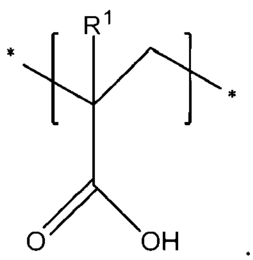

Chemical Formula 1-1B:

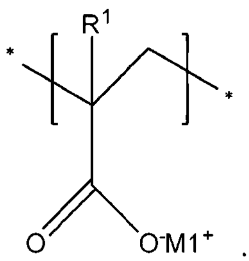

In Chemical Formulae 1-1A and 1-1B,

$R^1$ are the same or different, and each independently are or include a hydrogen atom or a C1 to C20 alkyl group,

M1 is or includes an alkali metal.

Chemical Formula 1-2:

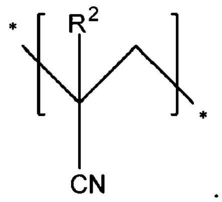

In Chemical Formula 1-2,

$R^2$ is or includes a hydrogen atom or a C1 to C20 alkyl group.

Chemical Formula 1-3A :

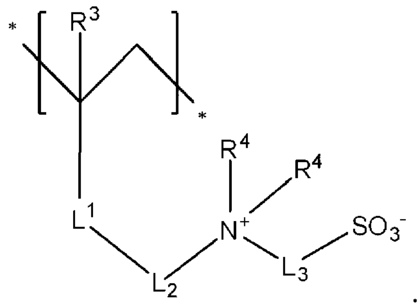

Chemical Formula 1-3B :

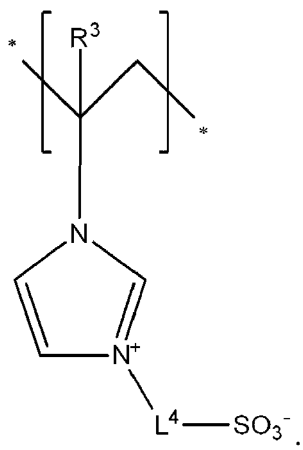

In Chemical Formulae 1-3A and 1-3B,

$R^3$ are the same or different, and each independently are or include a hydrogen atom or a C1 to C20 alkyl group,

$R^4$ are the same or different, and each independently are or include a hydrogen atom or a C1 to C20 alkyl group,

$L^1$ is or includes *-(C=O)-$NR^4$-$CH_2$-* or *-(C=O)-O-*, and

$L^2$ to $L^4$ each independently are or include a single bond, or a C1 to C20 alkylene group.

The first polymer may further include a fourth structural unit derived from an alkylene glycol-based monomer or a salt thereof, and represented by Chemical Formula 1-4A or Chemical Formula 1-4B.

Chemical Formula 1-4A:

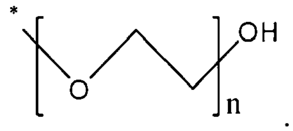

Chemical Formula 1-4B:

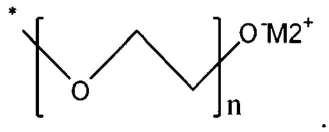

In Chemical Formulae 1-4A and 1-4B,

M2 is or includes an alkali metal, and

n is an integer in a range of 1 to 100.

According to an example embodiment of the present disclosure, an electrode for a rechargeable lithium battery may include an electrode current collector, and an electrode active material layer on the electrode current collector. The electrode active material layer may include an active material, a first composite conductive material, and a second composite conductive material. The first composite conductive material may include a first carbon nanostructure and a first polymer chemically bonded to a surface of the first carbon nanostructure. The second composite conductive material may include a second carbon nanostructure and a second polymer chemically bonded to a surface of the second carbon nanostructure. The first polymer and the second polymer may be different from each other, and an ionic conductivity of the first polymer may be greater than an ionic conductivity of the second polymer.

The first polymer may include at least one of a first structural unit derived from a (meth)acrylic acid-based monomer or a salt thereof, and represented by Chemical Formula 1-1A or Chemical Formula 1-1B, a second structural unit derived from the (meth)acrylonitrile-based monomer, and represented by Chemical Formula 1-2, a third structural unit derived from a zwitterionic monomer, and represented by Chemical Formula 1-3A or Chemical Formula 1-3B, and a fourth structural unit derived from a alkylene glycol-based monomer or salt thereof, and represented by Chemical Formula 1-4A or Chemical Formula 1-4B.

The second polymer may include at least one of a fifth structural unit represented by Chemical Formula 2-1 or a sixth structural unit represented by Chemical Formula 2-2.

Chemical Formula 2-1:

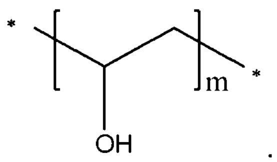

Chemical Formula 2-2:

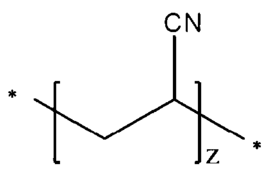

In Chemical Formulae 2-1 and 2-2,

m and z are each an integer in a range of 1 to 100.

According to an example embodiment of the present disclosure, a method for manufacturing an electrode for a rechargeable lithium battery may include providing an electrode current collector, and forming an electrode active material layer on the electrode current collector. The electrode active material layer may include an active material and a first composite conductive material.

Preparing the first composite conductive material may include introducing a functional group to a surface of the carbon nanostructure, and preparing a first mixture by mixing a first polymer and the first carbon nanostructure having the functional group.

The first polymer may include at least one of a first structural unit derived from a (meth)acrylic acid-based monomer or a salt thereof, and represented by Chemical Formula 1-1A or Chemical Formula 1-1B, a second structural unit derived from a (meth)acrylonitrile-based monomer, and represented by Chemical Formula 1-2, a third structural unit derived from a zwitterionic monomer, and represented by Chemical Formula 1- 3A or Chemical Formula 1-3B, and a fourth structural unit derived from a alkylene glycol-based monomer or salt thereof, and represented by Chemical Formula 1- 4A or Chemical Formula 1-4B.

The method for producing an electrode for a rechargeable lithium battery may further include adding a second composite conductive material to the electrode active material layer. Preparing the second composite conductive material may include, introducing a functional group to a surface of a second carbon nanostructure, and preparing a second mixture by mixing a second polymer and the second carbon nanostructure having the functional group.

The second polymer may include at least one of the fifth structural unit represented by Chemical Formula 2-1 or the sixth structural unit represented by Chemical Formula 2-2.

BRIEF DESCRIPTION OF DRAWINGS

FIG. 1 is a simplified conceptual diagram illustrating a rechargeable lithium battery according to example embodiments of the present disclosure.

FIGS. 2 to 5 are schematic diagrams illustrating a rechargeable lithium battery according to example embodiments of the present disclosure, FIG. 2 shows a cylindrical battery, FIG. 3 shows a prismatic battery, and FIGS. 4 and 5 show pouch-type batteries.

FIG. 6 is a cross-sectional view of an electrode for a rechargeable lithium battery according to example embodiments of the present disclosure.

FIG. 7A is an enlarged view for illustrating an electrode according to example embodiments of the disclosure.

FIGS. 7B and 7C are enlarged views illustrating an electrode according to other example embodiments of the present disclosure.

FIG. 8 is an enlarged view illustrating an electrode according to comparative examples.

FIG. 9 is a diagram describing a method for manufacturing an electrode according to an example embodiment of the present disclosure.

FIG. 10 is a schematic diagram of a preparing process of composite conductive materials according to an example embodiment of the present disclosure.

FIG. 11 is an SEM image of composite conductive materials according to an example embodiment of the present disclosure.

FIG. 12 is a flowchart illustrating a method of manufacturing an electrode for a rechargeable lithium battery, according to an example embodiment.

DETAILED DESCRIPTION

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be "directly on" the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

Unless otherwise explicitly stated in this description, singular forms may also include plural forms. In addition, unless explicitly stated otherwise, the phrase "A or B" may indicate "A but not B," "B but not A," and "A and B". The terms

"comprises/includes" and "comprising/including" do not exclude the presence or addition of one or more other components.

In this description, the phrase "combination thereof" may refer to a mixture, a stack, a composite, a copolymer, an alloy, a blend, or a reaction product.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

As used herein, when specific definition is not otherwise provided, the term "alkyl group" refers to a C1 to C20 alkyl group, the term "alkenyl group" may refer to a C2 to C20 alkenyl group, the term "cycloalkenyl group" may refer to a C3 to C20 cycloalkenyl group, the term "heterocycloalkenyl group" may refer to a C2 to C20 heterocycloalkenyl group, the term "aryl group" may refer to a C6 to C20 aryl group, the term "arylalkyl group" may refer to a C6 to C20 arylalkyl group, the term "alkylene group" may refer to a C1 to C20 alkylene group, the term "arylene group" may refer to a C6 to C20 arylene group, the term "alkylarylene group" may refer to a C6 to C20 alkylarylene group, the term "heteroarylene group" may refer to a C3 to C20 heteroarylene group, and the term "alkoxylene group" may refer to a C1 to C20 alkoxylene group.

As used herein, when specific definition is not otherwise provided, the term "substituted" may refer to replacement of at least one hydrogen atom by a substituent selected from a halogen atom (F, Cl, Br, or I), a hydroxyl group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and a combination thereof.

As used herein, when specific definition is not otherwise provided, the term "hetero" may refer to inclusion of at least one heteroatom from N, O, S, and P, in addition to carbon atom(s), in the chemical formula.

As used herein, when specific definition is not otherwise provided, the term "(meth)acrylate" may refer to both "acrylate" and "methacrylate," and the term "(meth)acrylic acid" may refer to both "acrylic acid" and "methacrylic acid".

As used herein, when a specific definition is not otherwise provided, the term "combination" may refer to mixing or copolymerization.

As used herein, when specific definition is not otherwise provided, the mark "*" may refer to a linking point with the same or different atom or chemical formula.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

The positive electrode 10 for the rechargeable lithium battery may include a current collector COL1 and a positive electrode active material layer AML1 on the current collector. The positive electrode active material layer AML1 may include a positive electrode active material and may further include a binder and/or a conductive material (e.g., an electrically conductive material).

For example, the positive electrode 10 may further include an additive that can constitute a sacrificial positive electrode.

An amount of the positive electrode active material in the positive electrode active material layer AML1 may range from about 90 wt% to about 99.5 wt% relative to 100 wt% of the positive electrode active material layer AML1. Amounts of the binder and the conductive material may each be in a range of about 0.5 wt% to about 5 wt% relative to 100 wt% of the positive electrode active material layer AML1.

The binder may improve attachment of positive electrode active material particles to each other, and improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause an undesired chemical change in a battery may be used as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be used as the current collector COL1, but the present invention is not limited thereto.

## **Positive Electrode** Active **Material**

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. $Li_aA_{1-b}X_b0_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_a$ (where $0.90 \leq a \leq 1.8$, $0 \leq b \leq 0.5$, $0 \leq c \leq 0.5$, and $0 < \alpha < 2$); $Li_aNi_{1-b-c}Mn_3X_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and $L^1$ may be or include at least one of Mn, Al, or a combination thereof.

For example, the positive electrode active material may be or include a high-nickel-based positive electrode active material having a nickel amount that is equal to or greater than about 80 mol%, 85 mol%, 90 mol%, 91 mol%, or 94 mol% and equal to or less than about 99 mol% relative to 100 mol% of metal devoid of lithium in the lithium transition metal composite oxide. The high-nickel-based positive electrode active material may achieve high capacity, and may thus be applied to the rechargeable lithium battery with high capacity and high density.

## **Negative Electrode 20**

The negative electrode 20 for the rechargeable lithium battery may include a current collector COL2, and a negative electrode active material layer AML2 positioned on the current collector COL2. The negative electrode active material layer AML2 may include a negative electrode active material, and may further include a binder and/or a conductive material (e.g., an electrically conductive material).

For example, the negative electrode active material layer AML2 may include a negative electrode active material in a range of about 90 wt% to about 99 wt%, a binder in a range of about 0.5 wt% to about 5 wt%, and a conductive material in a range of about 0 wt% to about 5 wt%.

The binder may improve attachment of negative electrode active material particles to each other, and improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause an undesired chemical change in a battery may be used as the conductive material. For example, the conductive material may include a carbon-based material such as at least one of natural graphite, artificial graphite, carbon black, acetylene black, ketjen black, carbon fiber, carbon nanofiber, and carbon nanotube; a metal-based material in the form of a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

## Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, $SiO_x$ (where $0<x\leq2$), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof). The Sn-based negative electrode active material may include at least one of Sn, $SnO_2$, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be present between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer on a surface of the core. The Si-based negative electrode active material or the Sn-based negative electrode active material may be used in combination with a carbon-based negative electrode active material.

## Separator 30

Based on a type of the rechargeable lithium battery, the separator 30 may be present between the positive electrode 10 and the negative electrode 20. The separator 30 may include one or more of polyethylene, polypropylene, and

polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one surface, or on opposite surfaces, of the porous substrate, which coating layer includes an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon™, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer, or may be present as a stack of a coating layer including the organic material and a coating layer including an inorganic material.

## Electrolyte ELL

The electrolyte ELL for the rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone, or in a mixture of two or more solvents.

In addition, when a carbonate-based solvent is used, a cyclic carbonate and a linear carbonate may be mixed, and the cyclic carbonate and the linear carbonate may be mixed in a volume ratio in a range of about 1:1 to about 1:9.

The lithium salt may be or include a material that dissolves in the non-aqueous organic solvent to constitute a supply source of lithium ions in a battery, and contributes to enabling a basic operation of the rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers in a range of 1 to 20), lithium trifluoromethane sulfonate, lithium tetrafluoroethanesulfonate, lithium difluorobis(oxalato)borate (LiDFOB), lithium difluorobis(oxalato)phosphate (LiDFOP), and lithium bis(oxalato)borate (LiBOB).

## Rechargeable Lithium Battery

Based on a shape of the rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment of the present disclosure, with FIG. 2 showing a cylindrical battery, FIG. 3 showing a prismatic battery, and FIGS. 4 and 5 showing pouch-type batteries. Referring to FIGS. 2 to 4, the rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an

electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

According to an example embodiment of the present disclosure, a rechargeable lithium battery may include an electrode, a separator, and an electrolyte. For example, a rechargeable lithium battery according to an example embodiment may include a positive electrode including a positive electrode active material, a negative electrode including a negative electrode active material, and a separator and an electrolyte between the positive electrode and the negative electrode. At least one of the positive electrode and the negative electrode may be discussed below, and as an example, the positive electrode may be the following electrode.

## Electrode for Rechargeable lithium battery

The following description focuses on an electrode according to example embodiments of the present disclosure.

FIG. 6 is a cross-sectional view of an electrode for a rechargeable lithium battery according to example embodiments of the present disclosure.

Referring to FIG. 6, an electrode 10 or 20 may include an electrode current collector COL and an electrode active material layer AML on the electrode current collector COL.

The electrode current collector COL may include the current collector COL1 or the current collector COL2 described above.

For example, the electrode current collector COL may include at least one of a copper foil, a nickel foil, a stainless-steel foil, a titanium foil, a nickel foam, a copper foam, a polymer substrate coated with a conductive metal, or a combination thereof.

In an example embodiment, aluminum (Al) may be used as the electrode current collector COL, but the present disclosure is not limited thereto.

The electrode active material layer AML may be stacked on the electrode current collector COL. That is, the electrode active material layer AML may be disposed on the electrode current collector COL.

The electrode active material layer AML may have a thickness TKL. The thickness TKL of the electrode active material layer AML may be in a range of about 10 μm to about 170 μm. For example, the thickness TKL of the electrode active material layer AML may be about 10 μm or more, 11 μm or more, about 15 μm or more, about 20 μm or more, about 30 μm or more, or about 40 μm or more. For example, the thickness TKL of the electrode active material layer AML may be about 170 μm or less, about 160 μm or less, about 150 μm or less, about 140 μm or less, about 130 μm or less, about 120 μm or less, about 110 μm or less, about 100 μm or less, about 90 μm or less, about 80 μm or less, about 70 μm or less, about 60 μm or less, about 50 μm or less. When the thickness TKL of the electrode active material layer AML satisfies the above-described range, a battery may exhibit an increased lifespan and a minimum or reduced change in volume during charge and discharge.

In an example embodiment, the thickness TKL may increase due to an increase in weight of an active material included in the electrode active material layer AML.

FIG. 7A is an enlarged view illustrating an electrode according to example embodiments of the present disclosure. FIG. 7A is an enlarged view showing region "M" of FIG. 6.

Referring to FIG. 7A, the electrode active material layer AML may be in contact with one surface of the electrode current collector COL. The one surface of the electrode active material layer AML may be a surface where the electrode active material layer AML may be in contact with the electrode current collector COL.

The electrode active material layer AML may include an active material CAM and a first composite conductive material CCM1.

When the electrode for the rechargeable lithium battery according to an example embodiment of the present disclosure is a positive electrode, any material that can be used as a positive electrode active material of the rechargeable lithium battery may be used as the active material CAM.

For example, the active material CAM may include a compound (e.g., a lithiated intercalation compound) that can reversibly intercalate and deintercalated lithium. The active material CAM may include lithium composite oxide represented by Chemical Formula 3 below.

Chemical Formula 3: $Li_{x4}M^1_yM^2_zM^3_{1-y-z}O_{2-a}X_a$.

In Chemical Formula 3,

$0.5 \leq x4 \leq 1.8$, $0 \leq a \leq 0.05$, $0 < y \leq 1$, $0 \leq z \leq 1$, and $0 \leq y+z \leq 1$,
$M^1$, $M^2$, and $M^3$ may each independently include at least one metal such as or including at least one of Ni, Co, Mn, Al, B, Ba, Ca, Ce, Cr, Fe, Mo, Nb, Si, Sr, Mg, Ti, V, W, Zr or La, and combinations thereof.

X may include at least one element such as or including at least one of F, S, P, or Cl.

In an example embodiment, in Chemical Formula 3, $M^1$ may be or include Ni, and may be $0.8 \leq y \leq 1$, and $0 \leq z \leq 0.2$.

For example, the active material CAM may include at least one of LMFP ($LiFePO_4$, iron lithium manganese phosphate), NMX (nickel manganese oxide, $NiMnO_2$), NCA ($LiNiCoAlO_2$, lithium nickel cobalt aluminum), or NCM ($LiNiCoMnO_2$, lithium nickel cobalt manganese).

When the electrode for the rechargeable lithium battery according to an example embodiment of the present disclosure is a negative electrode, any material that can be used as a negative electrode active material for the rechargeable lithium battery may be used as the active material CAM.

On the surface of the electrode active material layer AML, the first composite conductive material CCM1, may form a lithium ion path without the occurrence of binder migration. In addition, the first composite conductive material CCM1 may include a first polymer containing a functional group that is effective for lithium ion transfer, thereby exhibiting desired or improved ionic conductivity.

The first composite conductive material CCM1 may include a first carbon nanostructure and a first polymer chemically bonded to a surface of the first carbon nanostructure. The expression "chemically bonded" may indicate "bonded via ionic bond or covalent bond".

As the first composite conductive material CCM1 is formed of or includes the first carbon nanostructure and the first polymer that are chemically bonded, the first carbon nanostructure may be effectively dispersed without being agglomerated. Thus, the first composite conductive material CCM1 may improve in dispersibility, and may form a conductive path even with a small amount to achieve high capacity. In addition, even when the active material CAM expands and shrinks resulting from charging and discharging during battery operation, there may be no occurrence of agglomeration caused by migration of the first carbon nanostructure. In addition, the first composite conductive material CCM1 may maintain a conductive path due to an increase in tensile strength of the first polymer by the first carbon nanostructure, which may result in an enhancement in the lifetime thereof.

The first carbon nanostructure may include a chain or elongated shaped carbon material, not only exhibiting desired or improved mechanical strength, thermal conductivity, and chemical stability but also exhibiting electrical conductivity.

The first carbon nanostructure may be manufactured by a fabrication method such as, for example, arc discharge method, laser ablation, chemical vapor deposition, high pressure carbon monoxide separation (HIPCO).

The first carbon nanostructure may have a nano-scale diameter and a micro-scale length. For example, the first carbon nanostructure may have a diameter in a range of about 5 nm to about 100 nm, about 15 nm to about 90 nm, about 20 nm to about 80 nm, or about 30 nm to about 70 nm, and a length of about 10 μm to about 100 μm, about 15 μm to about 90 μm, about 20 μm to about 80 μm, or about 30 μm to about 70 μm.

For example, the first carbon nanostructure may include at least one of carbon nanotubes (CNT), carbon nanofibers (CNF), polyacetylene, graphene nanoribbons (GNR), graphene sheets, fullerenes, nanodiamonds, mesoporous carbon, amorphous carbon, carbon quantum dots, nanoporous carbon, carbon black, nanohorns, or vitreous carbon. For example, the first carbon nanostructure may include carbon nanotubes (CNT). The carbon nanotubes (CNT) may include a single-walled carbon nanotube (SWCNT), or a multi-walled carbon nanotube (MWCNT).

The first polymer may have different properties from the properties of a second polymer which is discussed below.

For example, the first polymer may have an ionic conductivity that is different from the ionic conductivity of a second polymer described below. The ionic conductivity may be one of the physical properties that indicate how effectively a polymer transports ions, and may be measured through an electrochemical method such as impedance spectroscopy.

An ionic conductivity of the first polymer may be greater than an ionic conductivity of a second polymer described below. According to an example embodiment, the ionic conductivity of the first polymer may be in a range of about $10^{-2}$ S/cm to about $10^{-3}$ S/cm.

The first polymer may be or include a mixed polymer containing a functional group which ionic conductivity is desired or improved, and may exhibit stable flexibility at high temperature while maintaining high ionic conductivity.

For example, the first polymer may have a weight average molecular weight (Mw) in a range of about 20,000 g/mol to about 2,500,000 g/mol, or about 50,000 g/mol to about 1,500,000 g/mol.

In this description, the term "weight average molecular weight" may refer to a value calculated as a molecular weight by, e.g., gel filtration chromatography.

The first polymer may include an ionic polymer. There may be no limitation on molecular weight of the ionic polymer, but it may be advantageous that the ionic polymer possess a functional group such as a hydroxyl group, a carboxyl group, or an amine group, and be compatible with the active material CAM and other additives included in an electrode composition to ensure that no issues arise during the preparation of the slurry. It may also be advantageous that

the ionic polymer have stable electrochemical properties during charge and discharge of the rechargeable lithium battery.

According to an example embodiment, the first polymer may include at least one of a first structural unit represented by Chemical Formula 1-1A or Chemical Formula 1-1B, a second structural unit represented by Chemical Formula 1-2, a third structural unit represented by Chemical Formula 1-3A or Chemical Formula 1-3B, or a fourth structural unit represented by Chemical Formula 1-4A or Chemical Formula 1-4B.

The first structural unit represented by Chemical Formula 1-1A or Chemical Formula 1-1B may be derived from a (meth)acrylic acid-based monomer or a salt thereof.

Chemical Formula 1-1A:

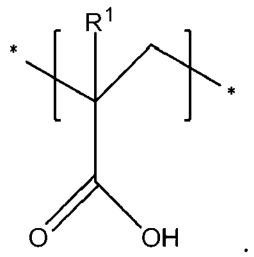

Chemical Formula 1-1B:

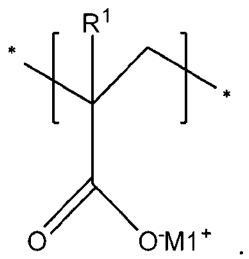

In Chemical Formulae 1-1A and 1-1B, $R^1$ may be the same or different, and may each independently be or include a hydrogen atom or a C1 to C20 alkyl group, and M 1 may be or include an alkali metal.

For example, the first structural unit may be derived from acrylic acid, and all of R1 may be hydrogen atom.

M1 may be derived from a metal ion in an electrolyte, and for example, may be or include a lithium atom.

The second structural unit represented by Chemical Formula 1-2 may be derived from a (meth)acrylonitrile-based monomer.

Chemical Formula 1-2:

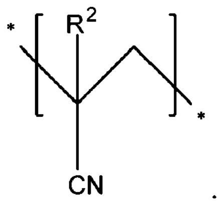

In Chemical Formula 1-2, $R^2$ may be or include a hydrogen atom or a C1 to C20 alkyl group.

The second structural unit may be derived from acrylonitrile. In this case, $R^2$ may be or include a hydrogen atom.

The third structural unit represented by Chemical Formula 1-3A or Chemical Formula 1-3B may be derived from a zwitterionic monomer.

Chemical Formula 1-3A:

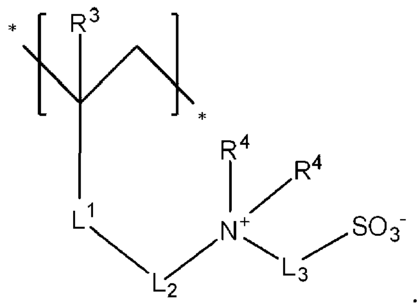

Chemical Formula 1-3B:

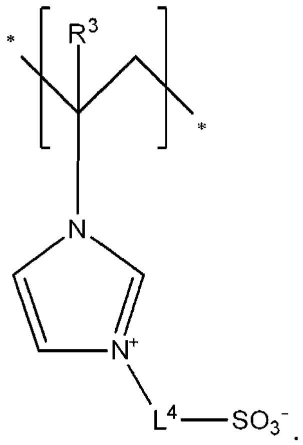

In Chemical Formulae 1-3A and 1-3B, $R^3$ may be the same or different, and may each independently be or include a hydrogen atom or a C1 to C20 alkyl group, $R^4$ may be the same or different and may each independently be or include a hydrogen atom or a C1 to C2O alkyl group, $L^1$ may be or include *-(C=O)-$NR^4$-$CH_2$-* or *-(C=O)-O-*, and $L^2$ to $L^4$ may each independently be or include a single bond or a C1 to C20 alkylene group.

When the third structural unit is derived from sulfobetaine (SB) and represented by Chemical Formula 1-3A, $R^3$ may be or include a methyl group, $L^1$ may be the same or different, and may each independently be or include *-(C=O)-$NR^4$-$CH_2$-* or *-(C=O)-O-*, and all of $L^2$ and $L^3$ may be or include an ethylene group.

When the third structural unit is derived from vinylimidazolium sulfonate (IMS) and represented by Chemical Formula 1-3B, $R^3$ may be or include a hydrogen atom, and $L^4$ may be or include a butylene group.

The fourth structural unit represented by Chemical Formula 1-4A or Chemical Formula 1-4B may be derived from an alkylene glycol-based monomer or a salt thereof.

Chemical Formula 1-4A:

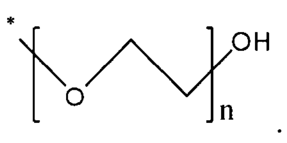

Chemical Formula 1-4B:

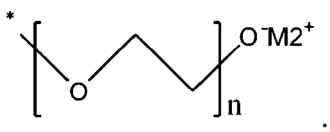

In Chemical Formulae 1-4A and 1-4B, M2 may be or include an alkali metal and n may be an integer in a range of 1 to 100.

For example, the fourth structural unit may be derived from ethylene glycol. In this case, n may be in a range of 5 to 20, or 5 to 10.

M2 may be derived from a metal ion in an electrolyte, and for example, may be or include a lithium atom.

When the first polymer includes the first to third structural units, relative to a total weight of the first polymer, the first structural unit may be included in an amount in a range of about 30 wt% to about 60 wt%, about 45 wt% to about 60 wt%, or about 45 wt% to about 60 wt%, the second structural unit may be included in an amount in a range of about 32 wt% to about 55 wt%, about 35 wt% to about 55 wt%, or about 35 wt% to about 50 wt%, and the third structural unit may be included in an amount in a range of about 1 wt% to about 15 wt%, about 3 wt% to about 15 wt%, or about 5 wt% to about 15 wt%. Within the ranges above, the first to third structural units are harmonized to provide advantages of high adhesion, desired or improved ionic conductivity, and low resistance.

When the first polymer includes the first to fourth structural units, relative to the total weight of the first polymer, the first structural unit may be included in an amount in a range of about 30 wt% to about 60 wt%, about 45 wt% to about 60 wt%, or about 45 wt% to about 60 wt%, the second structural unit may be included in an amount in a range of about 32 wt% to about 55 wt%, about 35 wt% to about 55 wt%, or about 35 wt% to about 50 wt%, and the third structural unit may be included in an amount in a range of about 1 wt% to about 15 wt%, about 3 wt% to about 15 wt%, or about 5 wt% to about 15 wt%, and the fourth structural unit may be included in an amount in a range of about 0.1 wt% to about 15 wt%, about 1 to about 15 wt%, or about 3 wt% to about 10 wt%. In this case, the fourth structural unit may contribute to further reducing resistance by increasing ionic conductivity of the first polymer.

The first polymer may be included in an amount in a range of about 40 wt% to about 80 wt% relative to a total weight of the first composite conductive material CCM1. When the amount of the first polymer in the first composite conductive material CCM1 is greater than the range above, there may be an increase in electrode internal resistance caused by side reactions. When the amount of the first polymer in the first composite conductive material CCM1 is less than the range above, a slight amount of the first polymer may not be evenly distributed.

According to an example embodiment, an amount of the active material CAM may be in a range of about 90 wt% to about 99.5 wt% relative to a total weight of the electrode active material layer AML. When the electrode active material layer AML satisfies the above range of the amount of active material CAM, it may be possible to maximize or increase capacity and energy density of the battery.

According to an example embodiment, an amount of the first composite conductive material CCM1 may be in a range of about 0.1 wt% to about 5 wt% relative to the total weight of the electrode active material layer AML. When the amount of the first composite conductive material CCM1 in the electrode active material layer AML is greater than the range above, electrode resistance may increase, and thus stability and performance of the battery may be deteriorated. When the first composite conductive material CCM1 is not included in the electrode active material layer AML or the amount of the first composite conductive material CCM1 in the electrode active material layer AML is less than the range above, it may be challenging to achieve an effect of an improvement in maximizing or improving ion conductivity.

FIG. 7B is an enlarged view illustrating an electrode according to another example embodiment of the present disclosure. FIG. 7B is an enlarged view showing region "M" of FIG. 6. In the present example embodiment, a detailed description of technical features repetitive to the technical features described above with reference to FIGS. 6 and 7A is omitted, and differences are described in detail.

Referring to FIG. 7B, the electrodes 10 and 20 according to another example embodiment of the present disclosure may further include a binder BND in the electrode active material layer AML.

According to another example embodiment, the electrode active material layer AML may include the active material CAM, the first composite conductive material CCM1, and the binder BND.

The active material CAM may be the same as the active material CAM described above with respect to FIG. 7A. The first composite conductive material CCM1 may be the same as the first composite conductive material CCM1 described above with respect to FIG. 7A.

The binder BND may improve attachment of particles of the active material CAM to each other, and improve attachment of the active material CAM to the electrode current collector COL. For example, the binder BND may include at least one of a rubber-based binder, a acrylate-based binder, a polyvinylidene fluoride-based binder, a polyvinylpyrrolidone-based binder, a acetate-based binder, a polyvinylalcohol-based binder, a cellulose based binder, or a combination thereof, but the present disclosure is not limited thereto.

The rubber-based binder may include, for example, at least one of styrene-butadiene rubber (SBR), nitrile-butadiene Rubber (NBR), hydrogenated nitrile butadiene rubber (HNBR), or ethylene propylene diene monomer rubber (EPDM), or a combination thereof.

The acrylate-based binder may include, for example, at least one of polyacrylic acid (PAA), polymethylmethacrylate, polyisobutylmethacrylate or poly (2-ethylhexyl acrylate), or a combination thereof.

The polyvinylidene fluoride-based binder may include, for example, at least one of polyvinylidenefluoride,

polyvinyidenefluoride-co-hexafluoropropylene, polyvinylidnefluoride-co-trichloroethylene, polyvinyidinefluoride-co-tetrafluoroethylene, polyvinylidenefluoride-co-trifluoroethylene, polyvinylidenefluoride-co-trifluorochloroethylene, polyvinylidenefluoride-co-hexafluoropropylene (PVdF), or polyvinyridenefluoride-co-trichloroethylene, or a combination thereof.

The polyvinylpyrrolidone-based binder may include, for example, polyvinyl pyrrolidone.

The nitrile-based binder may may include, for example, polyacrylonitrile or an acrylonitrile styrene-butadiene copolymer, or a combination thereof.

The acetate-based binder may include, for example, at least one of polyvinyl acetate, ethylene-co-vinyl acetate, cellulose acetate, cellulose acetate butyrate, or cellulose acetate propionate, or a combination thereof.

The polyvinyl alcohol-based binder may include, for example, polyvinyl alcohol.

The cellulose-based binder may include, for example, at least one of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), or cellulose gum, or a combination thereof.

According to another example embodiment, an amount of the active material CAM may be in a range of about 90 wt% to about 98 wt% relative to a total weight of the electrode active material layer AML. According to another example embodiment, an amount of the first composite conductive material CCM1 may be in a range of about 0.1 wt% to about 5 wt% relative to the total weight of the electrode active material layer AML. According to another example embodiment, an amount of the binder BND may be in a range of about 0.001 wt% to about 0.1 wt% relative to the total weight of the electrode active material layer AML. When the electrode active material layer AML satisfies the above ranges for the amounts of the active material CAM, the first composite conductive material CCM1, and the binder BND, it may be possible to maximize or increase capacity and energy density of the battery.

FIG. 7C is an enlarged view illustrating an electrode according to another example embodiment of the present disclosure. FIG. 7C is an enlarged view showing region "M" of FIG. 6. In the present example embodiment, a detailed description of technical features repetitive to the technical features described above with reference to FIGS. 6, 7A and 7B is omitted, and differences are described in detail.

Referring to FIG. 7C, the electrodes 10 and 20 according to another example embodiment of the present disclosure may include an electrode current collector COL and an electrode active material layer AML on the electrode current collector COL.

The electrodes 10 and 20 according to another example embodiment of the present disclosure may further include a second composite conductive material CCM2 in the electrode active material layer AML.

According to another example embodiment, the electrode active material layer AML may include the active material CAM, the first composite conductive material CCM1, and the second composite conductive material CCM2.

The active material CAM may be the same as the active material CAM described above with respect to FIGS. 6, 7A and 7B. The first composite conductive material CCM1 may be the same as the first composite conductive material CCM1 described above with respect to FIGS. 6, 7A and 7B.

According to another example embodiment, the electrode active material layer AML may include the second composite conductive material CCM2 in which the second carbon nanostructure is integrated with a second polymer containing a functional group with desired or improved adhesion, thereby securing both adhesion and lithium ion path at the surface of the active material layer AML. Accordingly, the electrode active material layer AML may exhibit a desired or improved ionic conductivity compared to the electrode active material layer AML including only the binder BND.

The second composite conductive material CCM2 may include a second carbon nanostructure and a second polymer chemically bonded to a surface of the second carbon nanostructure. The expression "chemically bonded" may indicate that "bonded via ionic bond or covalent bond".

As the second composite conductive material CCM2 is formed of or includes the second carbon nanostructure and the second polymer that are chemically bonded, the second carbon nanostructure may be effectively dispersed without being agglomerated. Thus, the second composite conductive material CCM2 may improve in dispersibility and may form a conductive path even with a small amount thereof to achieve high capacity. In addition, even when the active material CAM expands and shrinks resulting from charging and discharging during the battery operation, there may be no occurrence of agglomeration caused by migration of the second carbon nanostructure. In addition, the second composite conductive material CCM2 may maintain a conductive path due to an increase in tensile strength of the second polymer by the second carbon nanostructure, which may result in enhancement in lifetime.

The second carbon nanostructure may be the same as the first carbon nanostructure described above in the electrode active material layer AML. For example, the second carbon nanostructure may include carbon nanotube (CNT). The carbon nanotube (CNT) may include single-walled carbon nanotube (SWCNT), or multi-walled carbon nanotube (MWCNT).

The second polymer may include an organic binder that dissolves in an organic solvent. The organic binder may be advantageous to achieve various properties such as adhesion, tensile strength, and elasticity. Any polymer capable of functioning as the organic binder may be used without limitation as the second polymer.

The second polymer may include an adhesive polymer. There may be no limitation on molecular weight of the

adhesive polymer, but it may be advantageous that the adhesive polymer possess a functional group such as at least one of a hydroxyl group, a carboxyl group, and an amine group, and be compatible with the active material CAM and other additives included in an electrode composition to ensure no issues arise during preparation of slurry. It may also be advantageous that the adhesive polymer have stable electrochemical properties during charge and discharge of the rechargeable lithium battery.

The second polymer may include a functional group with high adhesion, and may have different properties from the properties of the first polymer.

For example, the second polymer may have an ionic conductivity that is different from the ionic conductivity of the first polymer described above. An ion conductivity of the second polymer may be less than the ion conductivity of the first polymer. According to an example embodiment, the ionic conductivity of the second polymer may be in a range of about $10^{-4}$ S/cm to about $10^{-3}$ S/cm.

The second polymer may have a glass transition temperature ($T_g$) that is different from the glass transition temperature of the first polymer. A glass transition temperature ($T_g$) of the second polymer may be lower than a glass transition temperature ($T_g$) of the first polymer.

The glass transition temperature ($T_g$) refers to a temperature at which a polymer changes from a glass state to a rubber state, and may be one of the physical properties that affect the hardness and flexibility of the polymer. For example, the glass transition temperature ($T_g$) of the first polymer may be higher than the glass transition temperature ($T_g$) of the second polymer described below. The glass transition temperature ($T_g$) may be measured through either a change in heat flow using differential scanning calorimetry (DSC) or an analysis of weight change with temperature using thermogravimetric analysis (TGA). According to an example embodiment, the glass transition temperature ($T_g$) of the first polymer may be in a range of about 40 °C to about 100 °C.

The second polymer may have flexible properties even at a low temperature due to high adhesion. Thus, the second polymer may have a glass transition temperature ($T_g$) that is relatively less than the glass transition temperature of the first polymer. According to an example embodiment, the glass transition temperature ($T_g$) of the second polymer may be in a range of about 10 °C to about 40 °C.

The second polymer may include at least one of polyvinyl alcohol (PVA), polyacrylonitrile (PAN), polyacrylic acid (PAA), polyethylene (PE), polyethylene glycol (PEG), polyimide (PI), polyacrylamide (PAM) polystyrene (PS), polyurethane (PU), polyvinyl butyral (PVB), polyvinyl pyrrolidine (PVP), or a combination thereof. The second polymer may be used alone or in a mixture of two or more substances.

According to an example embodiment, the second polymer may include at least one of a fifth structural unit represented by Chemical Formula 2-1, and a sixth structural unit represented by Chemical Formula 2-2.

Chemical Formula 2-1:

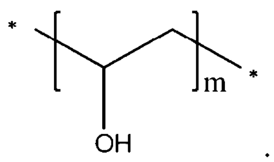

Chemical Formula 2-2:

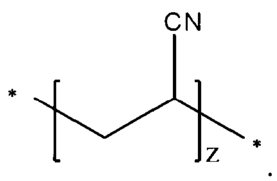

In Chemical Formulae 2-1 and 2-2, the m and z may each be an integer in a range of 1 to 100.

For example, the fifth structural unit may be derived from polyvinyl alcohol (PVA). For example, the sixth structural unit may be derived from polyacrylonitrile (PAN).

For example, the second polymer may include at least one of a polyvinyl alcohol-polyacrylonitrile (PVA-PAN) copolymer, a polyvinyl alcohol-polyethylene glycol (PVA-PEG) copolymer, a polyacrylic acid-polyacrylonitrile (PAA-PAN) copolymer, or a combination thereof.

The second polymer may be included in an amount in a range of about 40 wt% to about 80 wt% relative to a total weight of the second composite conductive material CCM2. When the amount of the second polymer in the second

composite conductive material CCM2 exceeds the range above, there may be an increase in electrode internal resistance caused by side reactions. When the amount of the second polymer in the second composite conductive material CCM2 is below the above-described range, a slight amount of the second polymer may not be evenly distributed.

According to another example embodiment, the amount of the active material CAM may be in a range of about 90 wt% to about 99.5 wt% relative to a total weight of the electrode active material layer AML.

According to another example embodiment, the amount of the first composite conductive material CCM1 may be in a range of about 0.1 wt% to about 5 wt% relative to the total weight of the electrode active material layer AML. When the amount of the first composite conductive material CCM1 in the electrode active material layer AML exceeds the range above, electrode resistance may increase, and thus stability and performance of the battery may be deteriorated. When the first composite conductive material CCM1 is not included in the electrode active material layer AML, or when the amount of the first composite conductive material CCM1 in the electrode active materials layer AML is less than the range above, it may be difficult to achieve an effect of an improvement in maximizing or improving ionic conductivity.

According to another example embodiment, the amount of the second composite conductive material CCM2 may be in a range of about 0.1 wt% to about 5 wt% relative to the total weight of the electrode active material layer AML. When the amount of the second composite conductive material CCM2 in the electrode active material layer AML exceeds the range above, electrode resistance may increase, and thus stability and performance of the battery may be deteriorated. When the second composite conductive material CCM2 is not included in the electrode active material layer AML, or when the amount of the second composite conductive material CCM2 in the electrode active material layer AML is less than the range above, it may be difficult to achieve an effect of improvement in maximizing or increasing adhesion.

According to another example embodiment, the first composite conductive material CCM1 and the second composite conductive material CCM2 in the electrode active material layer AML may be mixed in an amount ratio in a range of 7:3 to 3:7. When the amount ratio of the composite conductive materials CCM1 and CCM2 in the electrode active material layer AML is out of the range above, it may be difficult to achieve an effect of improvement in maximizing or improving ionic conductivity and adhesion.

According to another example embodiment, the electrode active material layer AML may include a binder BND or a conductive material CDM separated from the composite conductive materials CCM1 and CCM2 in a slight amount. For example, an amount of the binder BND in the electrode active material layer AML may be in a range of about 0.1 wt% or less, and an amount of the conductive material CDM may be in a range of about 0.1 wt% or less. Since the electrode active material layer AML includes a substantially small amount of the binder BND or the conductive material CDM, it may be considered that the binder BND or the conductive material CDM is substantially omitted.

FIG. 8 is an enlarged view illustrating an electrode according to comparative example. FIG. 8 is an enlarged view showing region "M" of FIG. 6, in the case of the electrode according to the comparative example.

Referring to FIG. 8, the electrodes 10 and 20 according to the comparative example may include a current collector COL, and an electrode active material layer AML on the electrode current collector COL.

In general, the electrodes 10 and 20 according to the comparative example may include an active material CAM, a conductive material CDM, and a binder BND in the electrode active material layer AML.

The active material CAM and the binder BND may be the same as the active material and the binder described above.

The conductive material CDM may provide the electrodes 10 and 20 with conductivity, and any suitable conductive material that does not cause an undesired chemical change in the battery, may be utilized as a conductive material, for example, a carbon-based material such as or including at least one of natural graphite, artificial graphite, carbon black, acetylene black, ketjen black, carbon fiber, carbon nanofiber, and carbon nanotube; a metal-based material such as a metal powder or metal fiber including at least one of copper, nickel, aluminum, silver; a conductive polymer such as polyphenylene derivative; or a mixture thereof.

As shown in FIGS. 6 and 7, the electrode active material layer AML according to the present disclosure may include the first composite conductive material CCM1 and the second composite conductive material CCM2 which correspond to the conductive material CDM and the binder BND in the electrode active material layer AML according to the comparative example.

According to an example embodiment, the binder BND or the conductive material CDM may not be included, or may be included in a slight amount in the electrode active material layer AML. That is, the amount of the binder BND or the conductive material CDM in the electrode active material layer AML may be substantially equal to 0 wt%.

The value of the combined amount of the binder BND and the conductive material CDM in the electrode active material layer AML according to the comparative example may be greater than the value of the amount of the composite conductive materials CCM1 and CCM2 in the electrode active material layer AML according to the example embodiments. Since the composite conductive materials CCM1 and CCM2 include a structure in which a carbon nanostructure and a polymer are densely bonded, even a small amount of the composite conductive materials CCM1 and CCM2 may maximize or increase conductivity and adhesion.

For example, the value of the combined amount of the binder BND and the conductive material CDM in the electrode active material layer AML according to the comparative example may be in a range of about 1 time to about 3 time greater than the value of the amount of the composite conductive materials CCM1 and CCM2 in the electrode active material layer AML according the example embodiments.

The electrode active material layer AML according to the example embodiments may include the composite conductive materials CCM1 and CCM2 in which a polymer is integrated with a carbon nanostructure, instead of including the binder BND and the conductive material CDM, thereby having a relatively greater porosity than the electrode active material layer AML according to the comparative example.

For example, the porosity of the electrode active material layer AML according to the comparative example may be in a range of about 10% to about 15%, and the porosity of the electrode active materials layer AML according to example embodiments may be in a range of about 20% to about 30%.

Therefore, since a reduced path for lithium ions is provided in the electrode active material layer AML according to the example embodiments, lithium ions may easily migrate in the electrode active material layer AML. In other words, the electrode active material layer AML according to the example embodiments may be improved in ionic conductivity.

In the electrodes 10 and 20 according to the example embodiments, by mixing and adding the first composite conductive material CCM1 and the second composite conductive material CCM2 to the electrode active material layer AML, it is possible to improve adhesion between the electrode current collector COL and the electrode active material layer AML, enhance ionic conductivity in the electrode active material layer AML, and secure lithium ion path on a surface of the electrode active material layer AML.

## Method for Manufacturing Electrode

FIG. 9 is a diagram describing a method for manufacturing an electrode according to an example embodiment of the present disclosure.

Referring to FIG. 9, a method for manufacturing an electrode according to an example embodiment of the present disclosure may include providing an electrode current collector COL, and forming an electrode active material layer AML on the electrode current collector COL.

The configurations of the electrode current collector COL and the electrode active material layer AML are the same as the configurations of the electrodes 10 and 20 according to the above-described example embodiments, and thus detailed descriptions thereof are omitted below.

In an example embodiment, the electrode active material layer AML may include the active material CAM and the first composite conductive material CCM1 described above with reference to FIG. 7A.

According to an example embodiment, forming the electrode active material layer AML may include being performed in a wet process or a dry process. In an example embodiment, the electrode active material layer AML may be formed by a wet process, but is not limited thereto.

In the wet process, the active material CAM and the first composite conductive material CCM1 may be mixed in a solvent to prepare an electrode mixture, and the mixture may be coated dried, and rolled on the electrode current collector COL. The solvent in the slurry may be or include a solvent commonly used in the art, and may include, for example, at least one of dimethyl sulfoxide (DMSO), isopropyl alcohol, N-methylpyrrolidone (NMP), acetone, water, or a combination thereof.

In the dry process, the active material CAM and the first composite conductive material CCM1 in a dry state may be dry-mixed without a solvent to prepare an electrode mixture, and the mixture may be disposed and rolled on the electrode current collector COL.

In another example embodiment, the electrode active material layer AML may include the active material CAM, the first composite conductive material CCM1, and the binder BND described above with reference to FIG. 7B.

According to another example embodiment, forming the electrode active material layer AML may include being performed in a wet process or a dry process.

For example, in the wet process, the active material CAM, the first composite conductive material CCM1, and the binder BND may be mixed in a solvent to prepare an electrode mixture. For example, in the dry process, the active material CAM, the first composite conductive material CCM1, and the binder BND in a dry state may be dry-mixed without a solvent to prepare an electrode mixture.

In another example embodiment, the electrode active material layer AML may include the active material CAM, the first composite conductive material CCM1, and the second composite conductive material CCM2 described above with reference to FIG. 7C.

According to another example embodiment, forming the electrode active material layer AML may include being performed in a wet process or a dry process.

For example, in the wet process, the active material CAM, the first composite conductive material CCM1, and the second composite conductive material CCM2 may be mixed in a solvent to prepare an electrode mixture. For example, in

the dry process, the active material CAM, the first composite conductive material CCM1, and the second composite conductive material CCM2 in a dry state may be dry-mixed without a solvent to prepare an electrode mixture.

FIG. 10 is a schematic diagram showing a process for preparing a composite conductive material chemically bonded to a polymer according to the present disclosure. Referring to FIG. 10, a method of preparing the composite conductive materials CCM1 and CCM2 is described in detail as follows.

The first composite conductive material CCM1 may include a first carbon nanostructure and a first polymer chemically bonded to a surface of the first carbon nanostructure. The second composite conductive material CCM2 may include a second carbon nanostructure and a second polymer chemically bonded to a surface of the second carbon nanostructure.

Each of, or at least one of, the first carbon nanostructure and the second carbon nanostructure may include at least one of carbon nanotube (CNT), carbon nanofiber (CNF), polyacetylene, graphene nanoribbon (GNR), graphene sheet, fullerene, nanodiamond, mesoporous carbon, amorphous carbon, carbon quantum dots, nanoporous carbon, carbon black, nanohorn, vitreous carbon, or a combination thereof.

The first polymer may be different from the second polymer, and an ionic conductivity of the first polymer may be greater than an ionic conductivity of the second polymer.

The first polymer may include at least one of a first structural unit derived from a (meth)acrylic acid-based monomer or a salt thereof, and represented by the above-described Chemical Formula 1-1A or Chemical Formula 1-1B, a second structural unit derived from a (meth)acrylonitrile-based monomer, and represented by the above-described Chemical Formula 1-2, a third structural unit derived from a zwitterionic monomer, and represented by above-described Chemical Formula 1-3A or Chemical Formula 1-3B, and a fourth structural unit derived from a alkylene glycol-based monomer or salt thereof, and represented by the above-described Chemical Formula 1-4A or Chemical Formula 1-4B.

For example, the first polymer may be or include a copolymer prepared by combining the first structural unit to the fourth structural unit.

According to one example embodiment, the first structural unit may be derived from acrylic acid. The second structural unit may be derived from acrylonitrile. The third structural unit may be derived from sulfobetaine (SB), or vinylimidazolium sulfonate (IMS). The fourth structural unit may be derived from ethylene glycol.

The second polymer may include at least one of the fifth structural unit represented by above-described Chemical Formula 2-1 or the sixth structural unit represented by above-described Chemical Formula 2-2.

The second polymer may include a fifth structural unit, a sixth structural unit, and a copolymer thereof. For example, the fifth structural unit may be derived from polyvinyl alcohol (PVA). For example, the sixth structural unit may be derived from polyacrylonitrile (PAN).

According to an example embodiment, the second polymer may include at least one of a polyvinyl alcohol-polyacrylonitrile (PVA-PAN) copolymer, a polyvinyl alcohol-polyethylene glycol (PVA-PEG) copolymer, or a polyacrylic acid-polyacrylonitrile (PAA-PAN) copolymer.

Referring to FIG. 10, preparing a first composite conductive material CCM1 may include introducing a functional group to a surface of a first carbon nanostructure, and preparing a first mixture by mixing a first polymer and the first carbon nanostructure having the functional group.

Preparing the second composite conductive material CCM2 may include introducing a functional group to a surface of a second carbon nanostructure, and preparing a second mixture by mixing a second polymer and the second carbon nanostructure having the functional group.

For chemical modification, a pretreatment process may be performed in which a functional group such as carboxyl groups (-COOH), hydroxyl groups (-OH), is introduced to the surface of each of the first and the second carbon nanostructures.

Introducing the functional group may include a pretreatment process that use at least one of a wet treatment using a strong acid, a plasma treatment, and a dry treatment using vacuum ultraviolet irradiation.

Preparing the first mixture may include mixing the first polymer and the first carbon nanostructure having a functional group. For example, the prepared first mixture may be obtained by adding the first carbon nanostructure to a solvent containing the first polymer. The prepared first mixture may cause a chemical reaction to induce a chemical bond.

Preparing the second mixture may include mixing the second polymer and the second carbon nanostructure having a functional group. For example, the prepared second mixture may be obtained by adding the second carbon nanostructure to a solvent containing the second polymer. The prepared second mixture may cause a chemical reaction to induce a chemical bond.

Each of the first and second mixtures may be subjected to stirring and heat treatment for chemical reaction. In one example, the stirring and heat treating may be performed at a temperature in the range of about 60 °C to about 90 °C.

For example, each of, or at least one of, the first and second mixtures may further include a crosslinker and a catalyst for activation of chemical reaction.

The first mixture that has undergone the reaction may be dried to finally prepare a first composite conductive material CCM1 in which the first carbon nanostructure and the first polymer are chemically bonded, and the second mixture

that has undergone the reaction may be dried, to finally prepare a second composite conductive material CCM2 in which the second carbon nanostructure and the second polymer are chemically bonding.

According to another example embodiment, the first composite conductive material CCM1 may be prepared by through self-assembly, in which the first polymer and the first carbon nanostructure having a functional group are mixed to form a first mixture, The first mixture is then vaporized or gelled, inducing the natural arrangement of the first carbon nanostructure and the first polymer. In the first composite conductive material CCM1, self-assembly may be used for its preparation, and the self-assembly may have a specific structure in which the first carbon nanostructure is arranged between the first polymer chains. Further, according to another example embodiment, the second composite conductive material CCM2 may be prepared through self-assembly, in which the second polymer and the second carbon nanostructure having a functional group are mixed to form a second mixture. The second mixture is then vaporized or gelled, inducing the natural arrangement of the second carbon nanostructure and the second polymer. In the second composite conductive material CCM2, self-assembly may be used for the preparation thereof, and may have a specific structure in which the second carbon nanostructure is arranged between the second polymer chains.

On the other hand, when a polymer and a carbon nanostructure having a functional group are simply mixed to be used as a composite conductive material, it may be difficult to induce a chemical bond between them during electrode manufacturing. Even if a physical bond is formed, the binding force thereof may be weaker than the binding force of a chemical bond, potentially reducing the effectiveness of reducing or suppressing agglomeration of the carbon nanostructure. The expression of physical bonding may indicate that the components are simply mixed without change in chemical properties of each component.

According to an example embodiment, the composite conductive materials CCM1 and CCM2 may form a chemical bond between the carbon nanostructure and the polymer to improve the dispersibility of the carbon nanostructure to form a conductive path even in a small amount. As a result, an amount of the active material in the active material layer may be increased to achieve a high capacity. In addition, even when the active material expands and contracts due to charging and discharging during operation of the lithium battery, conductive path may be maintained without agglomeration of the carbon nanostructure, and the life characteristics of the lithium battery may be improved.

A roll pressing process, a slitting process, and a notching process may then be performed, e.g., sequentially performed, on the electrodes 10 and 20 manufactured through the above-described processes. The positive electrode 10, the separator 30, and the negative electrode 20 are stacked to provide an electrolytic solution ELL, whereby the rechargeable lithium battery according to the present disclosure can be produced.

FIG. 12 is a flowchart illustrating a method of manufacturing an electrode for a rechargeable lithium battery, according to an example embodiment. In FIG. 12, the method 1200 includes operation 1210, which includes providing an electrode current collector. Operation 1220 includes forming an electrode active material layer on the electrode current collector. For example, the electrode active material layer includes an active material and a first composite conductive material. In another example, preparing the first composite conductive material includes introducing a functional group to a surface of a first carbon nanostructure, and preparing a first mixture by mixing a first polymer and the first carbon nanostructure having the functional group.

In a further example, the first polymer includes at least one of a first structural unit derived from a (meth)acrylic acid-based monomer or a salt thereof, and represented by Chemical Formula 1-1A or Chemical Formula 1-1B, a second structural unit derived from a (meth)acrylonitrile-based monomer, and represented by Chemical Formula 1-2, a third structural unit derived from a zwitterionic monomer and represented by Chemical Formula 1-3A or Chemical Formula 1-3B, and a fourth structural unit derived from an alkylene glycol-based monomer or a salt thereof, and represented by Chemical Formula 1-4A or Chemical Formula 1-4B.

Chemical Formula 1-1A:

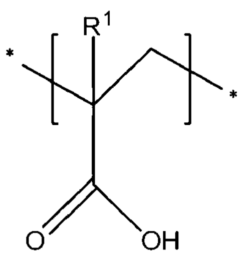

.

Chemical Formula 1-1B:

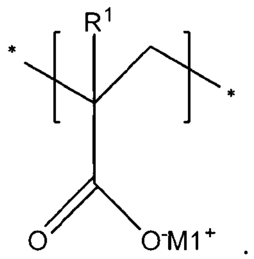

In Chemical Formulae 1-1A and 1-1B, $R^1$ are the same or different, and each independently include a hydrogen atom, or a C1 to C20 alkyl group, and M1 includes an alkali metal.

Chemical Formula 1-2:

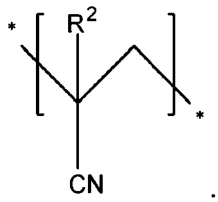

In Chemical Formula 1-2, $R^2$ is a hydrogen atom or a C1 to C20 alkyl group.

Chemical Formula 1-3A:

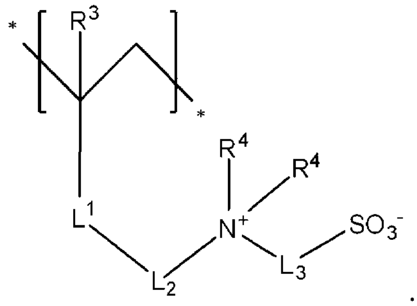

Chemical Formula 1-3B:

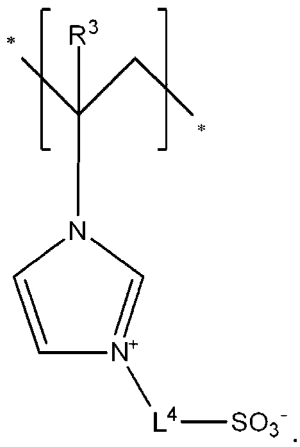

In Chemical Formulae 1-3A and 1-3B, $R^3$ are the same or different, and each independently include a hydrogen atom or a C1 to C20 alkyl group, $R^4$ are the same or different, and each independently include a hydrogen atom or a C1 to

C20 alkyl group, $L^1$ includes *-(C=O)-$NR^4$-$CH_2$-* or *-(C=O)-O-*, and $L^2$ to $L^4$ each independently include a single bond or a C1 to C20 alkylene group.

Chemical Formula 1-4A:

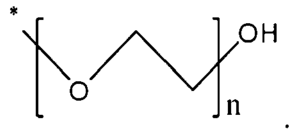

Chemical Formula 1-4B:

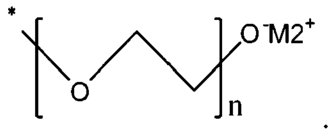

In Chemical Formulae 1-4A and 1-4B, M2 includes an alkali metal, and n is an integer in a range of 1 to 100.

In another example, the first composite conductive material includes the first carbon nanostructure and the first polymer chemically bonded to the surface of the first carbon nanostructure. In a further example, the method further includes adding a second composite conductive material to the electrode active material layer, wherein preparing the second composite conductive material includes introducing a functional group to a surface of a second carbon nanostructure, and preparing a second mixture by mixing a second polymer and the second carbon nanostructure having the functional group.

In yet another example, the second composite conductive material includes the second carbon nanostructure and the second polymer chemically bonded to the surface of the second carbon nanostructure, and the second polymer includes at least one of a fifth structural unit represented by Chemical Formula 2-1, or a sixth structural unit represented by Chemical Formula 2-2.

Chemical Formula 2-1:

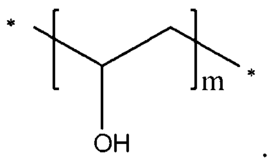

Chemical Formula 2-2:

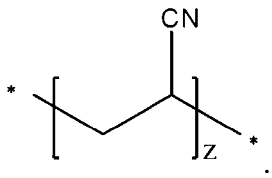

In Chemical Formulae 2-1 and 2-2, m and z are each an integer in a range of 1 to 100.

Hereinafter, Examples and Comparative Examples of the present disclosure are described. However, the following examples are merely examples of the present disclosure, and the present disclosure is not limited to the following examples.

**Preparation Example 1: Preparation of First Polymer**

An azo compound initiator and water were mixed relative to 100 parts by weight of a monomer mixture including 51 wt% of acrylic acid (AA), 39 wt% of acrylonitrile (AN), 5 wt% of sulfobetaine (SB), and 5 wt% of an alkylene glycol (ethylene glycol repeating number (n)=8). The initiator was used in 0.2 parts by weight relative to 100 parts by weight of the monomer mixture.

The obtained mixture was emulsion-polymerized to prepare a solution including a first polymer including a copolymer with a first structural unit derived from acrylic acid, a second structural unit derived from an acrylonitrile, a third structural unit derived from sulfobetaine, and a fourth structural unit (ethylene glycol repeating number (n)=8) derived from ethyleneglycol. The prepared first polymer was a PAA-AN-SB-PEG copolymer having a weight average molecular weight of 720,500 g/mol.

**Preparation Example 2: Preparation of First Composite Conductive Material**

2 g of multi-walled carbon nanotube (MWCNT) having a diameter of about 1 nm and a length of about 25 μm was pretreated at 40 °C for 24 hours using 300 ml of a 20 wt% nitric acid solution. After the treated 1 g of CNT was immersed in 200 ml of a solution prepared by mixing concentrated sulfuric acid and concentrated nitric acid in 3:1 (v/v %) ratio, the mixture was subjected to ultrasonic treatment at room temperature for 3 hours, and then stirred at 70 °C for 6 hours. Subsequently, the acid solution adhered to the CNT was thoroughly removed by filtering and washing with pure water several times, followed by drying in a vacuum oven at 80 °C for 24 hours to prepare CNT to which a carboxyl group (-COOH) was introduced.

3 g of the prepared first polymer and 27 g of anhydrous dimethyl acetamide (DMAc) were mixed in a reaction vessel, and the mixture was stirred and heated at 100 °C for 6 hours under a nitrogen atmosphere to completely dissolve the first polymer in DMAc.

After the reaction vessel was cooled to room temperature, 30 g of carboxylated CNT was added, and the mixture was subjected to ultrasonic treatment for 10 minutes and then stirred for 1 hr. Subsequently, a temperature of the reaction vessel was raised, and the mixture was stirred and reacted at 90 °C for 24 hours. After the reaction was completed, the solution in the reaction vessel was poured into 200 ml of ethyl alcohol solution to precipitate the reaction products, and then filtered, washed, and dried to prepare a first composite conductive material in which the first polymer was bonded to the surface of the CNT.

**Preparation Example 3: Preparation of Second Composite Conductive Material**

2 g of multi-walled carbon nanotube (MWCNT) having a diameter of about 1 nm and a length of about 25 μm was pretreated at 40° C for 24 hours using 300 ml of a 20 wt% nitric acid solution. After the treated 1 g of CNT was immersed in 200 ml of a solution prepared by mixing concentrated sulfuric acid and concentrated nitric acid in a 3:1 (v/v %) ratio, the mixture was subjected to ultrasonic treatment at room temperature for 3 hours, and then stirred at 70 °C for 6 hours. Subsequently, the acid solution adhered to the CNT was thoroughly removed by filtering and washing with pure water several times, followed by drying in a vacuum oven at 80 °C for 24 hours to prepare CNT to which a carboxyl group (-COOH) introduced.

A polyvinyl alcohol-polyacrylonitrile (PVA-PAN) copolymer was prepared as a second polymer.

3 g of the second polymer and 27 g of anhydrous dimethyl acetamide (DMAc) were mixed in a reaction vessel, and the mixture was stirred and heated at 100 °C for 6 hours under a nitrogen atmosphere to completely dissolve the second polymer in DMAc.

After the reaction vessel was cooled to room temperature, 30 g of carboxylated CNT was added, and the mixture was subjected to ultrasonic treatment for 10 minutes and then stirred for 1 hr. Subsequently, a temperature of the reaction vessel was raised, and the mixture was stirred and reacted at 90 °C for 24 hours. After the reaction was completed, the solution in the reaction vessel was poured into 200 ml of ethyl alcohol solution to precipitate the reaction products, and then filtered, washed, and dried to prepare a second composite conductive material in which the second polymer was bound to a surface of the CNT.

**Example 1: Manufacture of Positive Electrode**

The positive electrode active material and the prepared first composite conductive material were dispersed in N-methylpyrrolidone at a weight ratio of 100:1 to prepare a first active material slurry.

The prepared first active material slurry was coated to an aluminum (Al) thin film as a positive electrode current collector of about 15 μm in thickness, and dried to form an electrode active material layer of about 60 μm in thickness.

A roll pressing was performed to manufacture a positive electrode in which an electrode active material layer was stacked on the aluminum current collector.

In Example 1, $LiNiCoAlO_2$ was used as the positive electrode active material.

**Example 2**

A positive electrode was manufactured in the same manner as in Example 1, with a difference that a second

active material slurry was used instead of the first active material slurry.

Specifically, the second active material slurry was prepared by dispersing the positive electrode active material, the prepared first composite conductive material, and a binder in N-methylpyrrolidone at a weight ratio of 100:1:0.1.

In Example 2, $LiNiCoAlO_2$ was used as the positive electrode active material, and polyvinylidene fluoride (PVdF) was used as the binder.

## Example 3

A positive electrode was manufactured in the same manner as in Example 1, with a difference that a third active material slurry was used instead of the first active material slurry.

Specifically, the third active material slurry was prepared by dispersing the positive electrode active material, the prepared first composite conductive material, and the second composite conductive material in N-methylpyrrolidone at a weight ratio of 100:1:1.

## Example 4

A positive electrode was manufactured in the same manner as in Example 3, with a difference that the positive electrode active material, the first composite conductive material, and the second composite conductive material were mixed in a weight ratio of 100:1.2:0.8 as a composition of the third active material slurry when the positive electrode was manufactured.

## Example 5

A positive electrode was manufactured in the same manner as in Example 1, with a difference that a PAA-AN-SB copolymer was used as the first polymer instead of the PAA-ANT-SB-PEG copolymer in the manufacture of the first composite conductive material.

Specifically, the PAA-AN-SB copolymer was prepared by the following method.

An azo compound initiator and water were mixed relative to 100 parts by weight of a third monomer mixture including 50 wt% of acrylic acid (AA), 40 wt% of acrylonitrile (AN), and 10 wt% of sulfobetaine (SB). The initiator was used in 0.2 parts by weight relative to 100 parts by weight of the third monomer mixture. The obtained mixture was emulsion-polymerized to prepare the PAA-AN-SB copolymer having a first structural unit derived from acrylic acid, a second structural unit derived from an acrylonitrile, and a third structural unit derived from sulfobetaine.

## Comparative Example 1

A positive electrode was manufactured in the same manner as in Example 1, except that a fourth active material slurry was used instead of the first active material slurry.

Specifically, the fourth active material slurry was prepared by dispersing the positive electrode active material, the conductive material, and the binder in N-methylpyrrolidone at a weight ratio of 100:0.9:0.1.

In Comparative Example 1, $LiNiCoAlO_2$ was used as the positive electrode active material, carbon nanotube (CNT) was used as the conductive material, and polyvinylidene fluoride (PVdF) was used as the binder.

## Comparative Example 2

A positive electrode was manufactured in the same manner as in Example 1, with a difference that a fifth active material slurry was used instead of the first active material slurry.

Specifically, the fifth active material slurry was prepared by dispersing the positive electrode active material and the prepared second composite conductive material in N-methylpyrrolidone at a weight ratio of 100:1.

## Comparative Example 3

A positive electrode was manufactured in the same manner as in Example 3, with a difference that the positive electrode active material, the first composite conductive material, and the second composite conductive material were mixed in a weight ratio of 100:0.9:0.1 as a composition of the third active material slurry when the positive electrode was manufactured.

**Comparative Example 4**

A positive electrode was manufactured in the same manner as in Example 3, with a difference that the positive electrode active material, the first composite conductive material, and the second composite conductive material were mixed in a weight ratio of 100:0.1:0.9 as a composition in the third active material slurry when the positive electrode was manufactured.

The compositions of the positive electrodes according to the examples and comparative examples are shown in Table 1 below.

Table 1:

| Category | Positive Electrode Active Material Amount (wt%) | First Composite Conductive Material Amount (wt%) | Second Composite Conductive Material Amount (wt%) |
|---|---|---|---|
| Example 1 | 100 | 1 (CNT/PAA-AN-SB-PEG) | - |
| Example 2 | 100 | 1 (CNT/PAA-AN-SB-PEG) | - |
| Example 3 | 100 | 1 (CNT/PAA-AN-SB-PEG) | 1 (CNT/PVA-PAN) |
| Example 4 | 100 | 1.2 (CNT/PAA-AN-SB-PEG) | 0.8 (CNT/PVA-PAN) |
| Example 5 | 100 | 1 (CNT/PAA-AN-SB) | - |
| Comparative Example 1 | 100 | - | - |
| Comparative Example 2 | 100 | - | 1 (CNT/PVA-PAN) |
| Comparative Example 3 | 100 | 0.9 (CNT/PAA-AN-SB-PEG) | 0.1 (CNT/PVA-PAN) |
| Comparative Example 4 | 100 | 0.1 (CNT/PAA-AN-SB-PEG) | 0.9 (CNT/PVA-PAN) |

**Evaluation Example 1: Confirmation of Composite Conductive Material Structure**

The first composite conductive material prepared in the examples was photographed with a scanning electron microscope (SEM).

FIG. 11 is an SEM image of the first composite conductive material prepared in Examples.

Referring to FIG. 11, when the first composite conductive material prepared in Examples is observed by a scanning electron microscope (SEM), it can be seen that the first polymer is located within 500 nm from a surface of the carbon nanostructure.

Likewise, when the second composite conductive material prepared in Examples is observed by a scanning electron microscope (SEM), the second polymer is located within 500 nm from a surface of the carbon nanostructure.

**Evaluation Example 2: Evaluation of Adhesion and Ionic Conductivity**

Peel strength of the positive electrodes prepared in Examples and Comparative Examples was measured by a method in accordance with ASTM D3330. The instrument used for the measurement was a UTM, Instron 3345.

Specifically, the positive electrode plates in which the active material layers were disposed on both surfaces of the current collectors produced in Examples and Comparative Examples were cut into a size of 25 mm × 150 mm to prepare 20 specimens each. At room temperature, after the adhesive was coated on the glass substrate, a positive electrode plate was attached onto the adhesive, roll-pressed, one end of the positive electrode plate was folded 180 degrees, and then the force applied was measured while pulling at a speed of 100 mm/min in a direction opposite to the one end. The evaluation results are shown in Table 2 below.

The surface resistance was measured for the positive electrodes manufactured in examples and comparative examples.

The surface resistance was measured five times at room temperature (about 25 °C) using Laresta-GP (MCP-T600 model, MITSUBISHI CHEMICAL). The results are shown in Table 2 below.

Table 2:

| Category | Peel Strength (gf/mm) | Resistance (Ω $cm^2$) |
|---|---|---|
| Example 1 | 0.60 | 0.35 |

(continued)

| Category | Peel Strength (gf/mm) | Resistance (Ω $cm^2$) |
|---|---|---|
| Example 2 | 0.71 | 0.48 |
| Example 3 | 0.80 | 0.49 |
| Example 4 | 0.79 | 0.60 |
| Example 5 | 0.72 | 0.51 |
| Comparative Example 1 | 0.50 | 0.70 |
| Comparative Example 2 | 0.60 | 0.80 |
| Comparative Example 3 | 0.41 | 0.63 |
| Comparative Example 4 | 0.55 | 0.67 |

As shown in Table 2, the peel strength was increased in the positive electrodes of the Examples compared to the positive electrodes of Comparative Examples. Therefore, the positive electrode of Example exhibited a significantly improved adhesive force between the positive electrode active material layer and the current collector compared to the positive electrode of Comparative Example. In addition, the electrodes of the examples exhibited improved ionic conductivity at room temperature compared to the electrodes of the comparative examples.

**Evaluation Example 3: Evaluation of Charge-Discharge Cycle Characteristics**

Manufacture of Rechargeable Lithium Battery:

98 wt% of a negative electrode active material in which graphite and a Si complex were mixed at a weight ratio of 92:8, 1 wt% of styrene-butadiene rubber (SBR), and 1 wt% of carboxymethyl cellulose (CMC) were mixed and then added to distilled water, and a mechanical stirrer was utilized to stir the mixture for 60 minutes to prepare a negative electrode active material slurry. The slurry was coated to a thickness of about 60 μm on a copper current collector having a thickness of 10 μm by using a doctor blade, dried in a hot air dryer at 100 °C for 0.5 hours, dried again in a vacuum at 120 °C for 4 hours, and then roll-pressed to manufacture a negative electrode.

1.15 M of $LiPF_6$ was dissolved in a non-aqueous organic solvent in which ethylene carbonate (EC), ethyl methyl carbonate (EMC), and dimethyl carbonate (DMC) were mixed at a volume ratio of 20:40:40 to prepare an electrolyte.

The positive electrode, the negative electrode, and a polyethylene separator of 16 μm in thickness were assembled to manufacture an electrode assembly, and the electrolyte was injected into the electrode assembly to manufacture a rechargeable lithium battery.

For each of the rechargeable lithium batteries manufactured in examples and comparative examples, after a charge-discharge cycle was executed 300 times under the conditions of 25 °C, 0.5 C charge (CC/CV, 4.25 V, 0.05 C Cut-off) / 0.5 C discharge (CC, 2.8 V Cut-off), a discharge capacity was measured to calculate a capacity retention rate. The results are shown in Table 3 below. The capacity retention rate was calculated according to the following Formula 1.

$$\text{Capacity retention rate (\%)} = (\text{discharge capacity after 300 cycles/initial discharge capacity}) \times 100. \qquad \text{Formula 1:}$$

Table 3:

| Category | Capacity Retention (%) |
|---|---|
| Example 1 | 96.5 |
| Example 2 | 93.7 |
| Example 3 | 95.7 |
| Example 4 | 92.3 |
| Example 5 | 95.0 |
| Comparative Example 1 | 85.6 |
| Comparative Example 2 | 89.0 |

(continued)

| Category | Capacity Retention (%) |
| --- | --- |
| Comparative Example 3 | 88.2 |
| Comparative Example 4 | 82.1 |

Referring to Table 3, the capacity retention rate in charge-discharge cycles at room temperature was improved in the cases (Examples 1 to 5) corresponding to the electrode according to the examples of the present disclosure, compared to the cases corresponding to the electrode according to Comparative Examples.

The electrode according to the present disclosure can be applied to an electrode active material layer containing a composite conductive material having desired or improved ion conductivity, and can have an effect of improving the life characteristics of a rechargeable lithium battery.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

The present disclosure additionally includes the following numbered embodiments:

1. An electrode for a rechargeable lithium battery, the electrode comprising:

    an electrode current collector; and
    an electrode active material layer on the electrode current collector,
    wherein the electrode active material layer comprises an active material and a first composite conductive material,
    wherein the first composite conductive material comprises a first carbon nanostructure and a first polymer chemically bonded to a surface of the first carbon nanostructure,
    wherein the first polymer comprises:

        a first structural unit derived from a (meth)acrylic acid-based monomer or a salt thereof, and represented by Chemical Formula 1-1A or Chemical Formula 1-1B;
        a second structural unit derived from a (meth)acrylonitrile-based monomer, and represented by Chemical Formula 1-2; and
        a third structural unit derived from a zwitterionic monomer, and represented by Chemical Formula 1-3A or Chemical Formula 1-3B,

(Chemical Formula 1-1A)

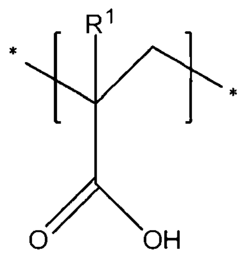

(Chemical Formula 1-1B)

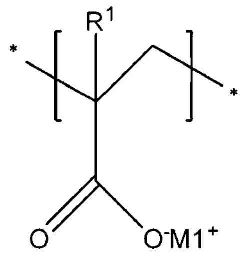

wherein in Chemical Formulae 1-1A and 1-1B,
$R^1$ are the same or different, and are each independently a hydrogen atom or a C1 to C20 alkyl group,
M1 is an alkali metal,

(Chemical Formula 1-2)

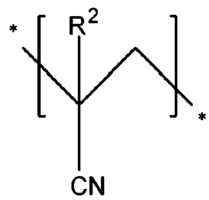

wherein in Chemical Formula 1-2,
$R^2$ is a hydrogen atom or a C1 to C20 alkyl group,

(Chemical Formula 1-3A)

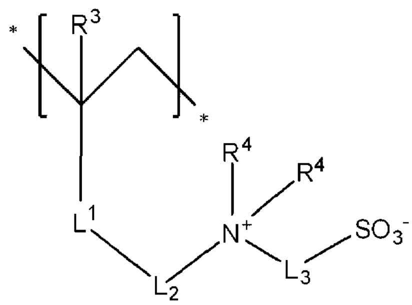

(Chemical Formula 1-3B)

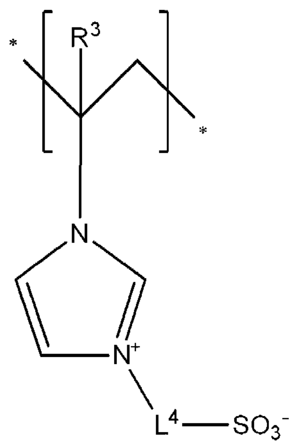

wherein in Chemical Formulae 1-3A and 1-3B,
$R^3$ are the same or different, and are each independently a hydrogen atom or a C1 to C20 alkyl group,
$R^4$ are the same or different, and are each independently a hydrogen atom or a C1 to C20 alkyl group,
$L^1$ is *-(C=O)-$NR^4$-$CH_2$-* or *-(C=O)-O-*, and
$L^2$ to $L^4$ are each independently a single bond, or a C1 to C20 alkylene group.

2. The electrode of Embodiment 1, wherein the first polymer further comprises a fourth structural unit derived from an alkylene glycol-based monomer or a salt thereof, and represented by Chemical Formula 1-4A or Chemical Formula 1-4B,

(Chemical Formula 1-4A)

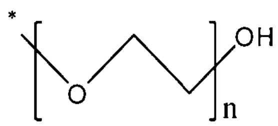

(Chemical Formula 1-4B)

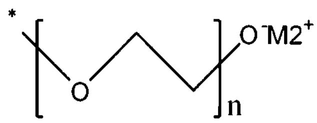

wherein in Chemical Formulae 1-4A and 1-4B,

M2 is an alkali metal, and
n is an integer between 1 and 100.

3. The electrode of Embodiment 1, wherein the first carbon nanostructure comprises at least one of carbon nanotube (CNT), carbon nanofiber (CNF), polyacetylene, graphene nanoribbon (GNR), graphene sheet, fullerene, nanodiamond, mesoporous carbon, amorphous carbon, carbon quantum dots, nanoporous carbon, carbon black, nanohorn, or vitreous carbon.
4. The electrode of Embodiment 1, wherein an amount of the first polymer is about 40 wt% to about 80 wt% relative to a total weight of the first composite conductive material, and/or
wherein an amount of the first composite conductive material in the electrode active material layer is about 0.1 wt% to about 5 wt%.
5. The electrode of Embodiment 1, wherein the active material is represented by Chemical Formula 3,

(Chemical Formula 3) $Li_{x4}M^1_yM^2_zM^3_{1-y-z}O_{2-a}X_a$

wherein in Chemical Formula 3,
$0.5 \leq x4 \leq 1.8$, $0 \leq a \leq 0.05$, $0 < y \leq 1$, $0 \leq z \leq 1$, and $0 \leq y+z \leq 1$,
$M^1$, $M^2$ and $M^3$ are each independently Ni, Co, Mn, Al, B, Ba, Ca, Ce, Cr, Fe, Mo, Nb, Si, Sr, Mg, Ti, V, W, Zr, La, or a combination thereof, and
X comprises one or more elements selected from F, S, P, or Cl.

6. The electrode of Embodiment 1, wherein the electrode active material layer further comprises a binder, and preferably wherein the binder comprises at least one of a rubber-based binder, an acrylate-based binder, a polyvinylidene fluoride-based binder, a polyvinylpyrrolidone-based binder, an acetate-based binder, a polyvinylalcohol-based binder, a cellulose-based binder, or a combination thereof.
7. An electrode for a rechargeable lithium battery, the electrode comprising:

an electrode current collector; and
an electrode active material layer on the electrode current collector,
wherein the electrode active material layer comprises an active material, a first composite conductive material, and a second composite conductive material,
wherein the first composite conductive material comprises a first carbon nanostructure and a first polymer

chemically bonded to a surface of the first carbon nanostructure,
wherein the second composite conductive material comprises a second carbon nanostructure and a second polymer chemically bonded to a surface of the second carbon nanostructure,
wherein the first polymer and the second polymer are different from each other, and
wherein an ionic conductivity of the first polymer is greater than an ionic conductivity of the second polymer.

8. The electrode of Embodiment 7, wherein a glass transition temperature ($T_g$) of the second polymer is lower than a glass transition temperature ($T_g$) of the first polymer.
9. The electrode of Embodiment 7 or 8, wherein each of the first and second carbon nanostructures comprises at least one of carbon nanotube (CNT), carbon nanofiber (CNF), polyacetylene, graphene nanoribbon (GNR), graphene sheet, fullerene, nanodiamond, mesoporous carbon, amorphous carbon, carbon quantum dots, nanoporous carbon, carbon black, nanohorn, or vitreous carbon.
10. The electrode of any one of Embodiments 7 to 9, wherein the first polymer comprises:

a first structural unit derived from a (meth)acrylic acid-based monomer or a salt thereof, and represented by Chemical Formula 1-1A or Chemical Formula 1-1B;
a second structural unit derived from a (meth)acrylonitrile-based monomer, and represented by Chemical Formula 1-2; and
a third structural unit derived from a zwitterionic monomer, and represented by Chemical Formula 1-3A or Chemical Formula 1-3B,

(Chemical Formula 1-1A)

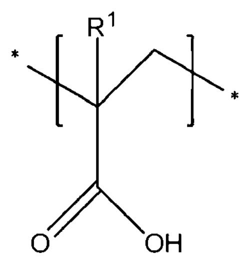

(Chemical Formula 1-1B)

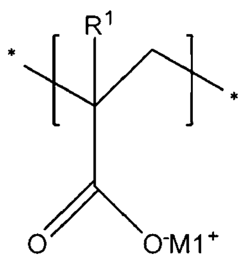

wherein in Chemical Formulae 1-1A and 1-1B,
$R^1$ are the same or different, and are each independently a hydrogen atom or a C1 to C20 alkyl group,
M1 is an alkali metal,

(Chemical Formula 1-2)

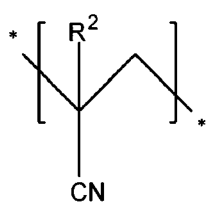

wherein in Chemical Formula 1-2,
$R^2$ is a hydrogen atom or a C1 to C20 alkyl group,

(Chemical Formula 1-3A)

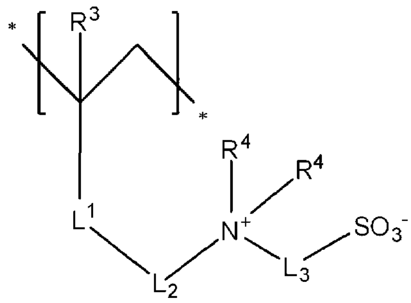

(Chemical Formula 1-3B)

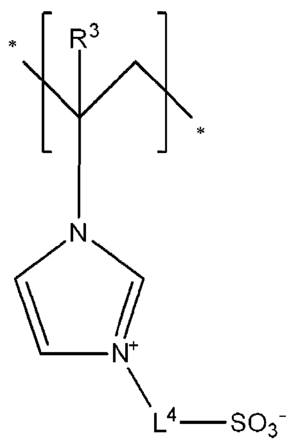

wherein in Chemical Formulae 1-3A and 1-3B,
$R^3$ are the same or different, and are each independently a hydrogen atom or a C1 to C20 alkyl group,
$R^4$ are the same or different, and are each independently a hydrogen atom or a C1 to C20 alkyl group,
$L^1$ is *-(C=O)-$NR^4$-$CH_2$-* or *-(C=O)-O-*, and
$L^2$ to $L^4$ are each independently a single bond, or a C1 to C20 alkylene group.

11. The electrode of Embodiment 10, wherein the first polymer further comprises a fourth structural unit derived from an alkylene glycol-based monomer or a salt thereof, and represented by Chemical Formula 1-4A or Chemical Formula 1-4B,

(Chemical Formula 1-4A)

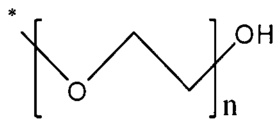

(Chemical Formula 1-4B)

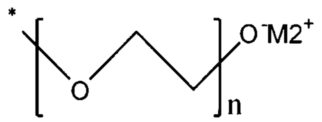

wherein in Chemical Formulae 1-4A and 1-4B,

M2 is an alkali metal, and
n is an integer between 1 and 100.

12. The electrode of any one of Embodiments 7-11, wherein the second polymer comprises at least one of polyvinyl alcohol (PVA), polyacrylonitrile (PAN), polyacrylic acid (PAA), polyethylene (PE), polyethylene glycol (PEG), polyimide (PI) and polyacrylamide (PAM), polystyrene (PS), polyurethane (PU), polyvinyl butyral (PVB), polyvinyl pyrrolidine (PVP), or a combination thereof.
13. The electrode of any one of Embodiments 7-12, wherein the second polymer comprises at least one of a fifth structural unit represented by Chemical Formula 2-1, or a sixth structural unit represented by Chemical Formula 2-2,

(Chemical Formula 2-1)

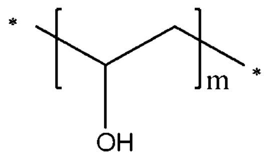

(Chemical Formula 2-2)

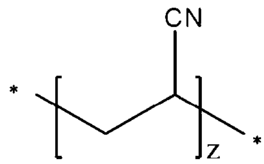

wherein in Chemical Formulae 2-1 and 2-2, m and z are each an integer between 1 and 100.
14. The electrode of any one of Embodiments 7-13, wherein an amount of the first polymer is about 40 wt% to about 80 wt% relative to a total weight of the first composite conductive material,

wherein an amount of the second polymer is about 40 wt% to about 80 wt% relative to a total weight of the second composite conductive material,
wherein an amount of the first composite conductive material in the electrode active material layer is about 0.1 wt% to about 5 wt%, and
wherein an amount of the second composite conductive material in the electrode active material layer is about 0.1 wt% to about 5 wt%.

15. The electrode of any one of Embodiments 7-14, wherein an amount ratio of the first composite conductive material and the second composite conductive material in the electrode active material layer is about 7:3 to about 3:7.
16. The electrode of any one of Embodiments 7-15, wherein the electrode active material layer is free of a binder.
17. A method for manufacturing an electrode for a rechargeable lithium battery, the method comprising:

providing an electrode current collector; and
forming an electrode active material layer on the electrode current collector,
wherein the electrode active material layer comprises an active material and a first composite conductive material, and
wherein preparing the first composite conductive material comprises:

introducing a functional group to a surface of a first carbon nanostructure; and

preparing a first mixture by mixing a first polymer and the first carbon nanostructure having the functional group,

wherein the first polymer comprises at least of one of:

a first structural unit derived from a (meth)acrylic acid-based monomer or a salt thereof, and represented by Chemical Formula 1-1A or Chemical Formula 1-1B;

a second structural unit derived from a (meth)acrylonitrile-based monomer, and represented by Chemical Formula 1-2;

a third structural unit derived from a zwitterionic monomer and represented by Chemical Formula 1-3A or Chemical Formula 1-3B; and

a fourth structural unit derived from an alkylene glycol-based monomer or a salt thereof, and represented by Chemical Formula 1-4A or Chemical Formula 1-4B,

(Chemical Formula 1-1A)

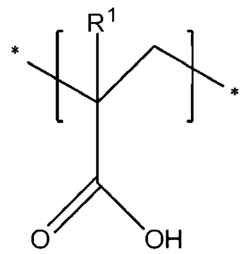

(Chemical Formula 1-1B)

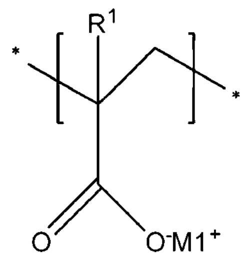

wherein in Chemical Formulae 1-1A and 1-1B,

$R^1$ are the same or different, and are each independently a hydrogen atom, or a C1 to C20 alkyl group,

M1 is an alkali metal,

(Chemical Formula 1-2)

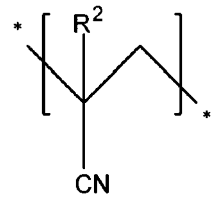

wherein in Chemical Formula 1-2,

$R^2$ is a hydrogen atom or a C1 to C20 alkyl group,

(Chemical Formula 1-3A)

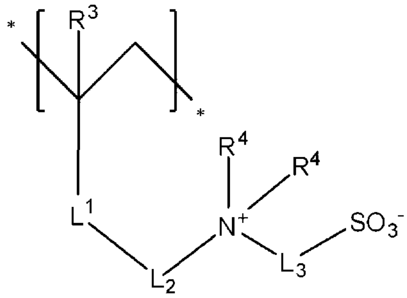

(Chemical Formula 1-3B)

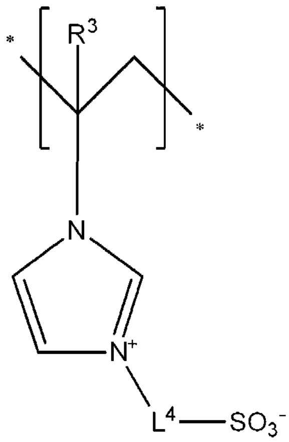

wherein in Chemical Formulae 1-3A and 1-3B,
$R^3$ are the same or different, and are each independently a hydrogen atom or a C1 to C20 alkyl group,
$R^4$ are the same or different, and are each independently a hydrogen atom or a C1 to C20 alkyl group,
$L^1$ is *-(C=O)-$NR^4$-$CH_2$-* or *-(C=O)-O-*,
$L^2$ to $L^4$ are each independently a single bond or a C1 to C20 alkylene group,

(Chemical Formula 1-4A)

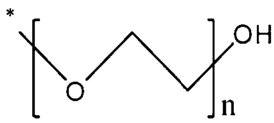

(Chemical Formula 1-4B)

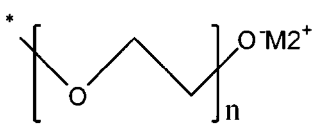

wherein in Chemical Formulae 1-4A and 1-4B,
M2 is an alkali metal, and
n is an integer between 1 and 100.

18. The method of Embodiment 17, wherein the first composite conductive material comprises the first carbon nanostructure and the first polymer chemically bonded to the surface of the first carbon nanostructure.
19. The method of Embodiment 17 or 18, further comprising adding a second composite conductive material to the electrode active material layer, and
wherein preparing the second composite conductive material comprises:

introducing a functional group to a surface of a second carbon nanostructure; and
preparing a second mixture by mixing a second polymer and the second carbon nanostructure having the functional group.

20. The method of Embodiment 19, wherein the second composite conductive material comprises the second carbon nanostructure and the second polymer chemically bonded to the surface of the second carbon nanostructure, and wherein the second polymer comprises at least one of a fifth structural unit represented by Chemical Formula 2-1, or a sixth structural unit represented by Chemical Formula 2-2,

(Chemical Formula 2-1)

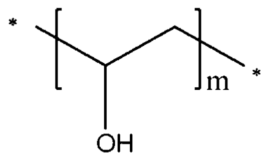

(Chemical Formula 2-2)

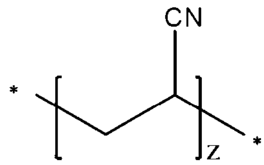

wherein in Chemical Formulae 2-1 and 2-2, m and z are each an integer between 1 and 100.

## Claims

**1.** An electrode (10, 20) for a rechargeable lithium battery (100), the electrode (10, 20) comprising:

an electrode current collector; and
an electrode active material layer on the electrode current collector,
wherein the electrode active material layer comprises an active material and a first composite conductive material,
wherein the first composite conductive material comprises a first carbon nanostructure and a first polymer chemically bonded to a surface of the first carbon nanostructure,
wherein the first polymer comprises:

a first structural unit derived from a (meth)acrylic acid-based monomer or a salt thereof, and represented by Chemical Formula 1-1A or Chemical Formula 1-1B;
a second structural unit derived from a (meth)acrylonitrile-based monomer, and represented by Chemical Formula 1-2; and
a third structural unit derived from a zwitterionic monomer, and represented by Chemical Formula 1-3A or Chemical Formula 1-3B,

Chemical Formula 1-1A:

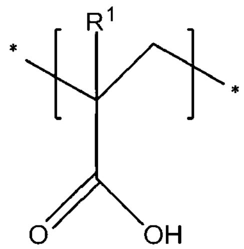

;

Chemical Formula 1-1B:

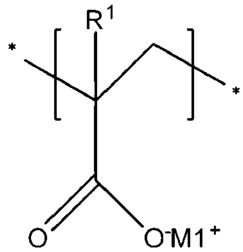

;

wherein in Chemical Formulae 1-1A and 1-1B,
$R^1$ are the same or different, and each independently comprise a hydrogen atom or a C1 to C20 alkyl group,
M1 comprises an alkali metal,

Chemical Formula 1-2:

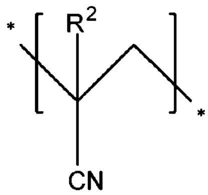

;

wherein in Chemical Formula 1-2,
$R^2$ comprises a hydrogen atom or a C1 to C20 alkyl group,

Chemical Formula 1-3A:

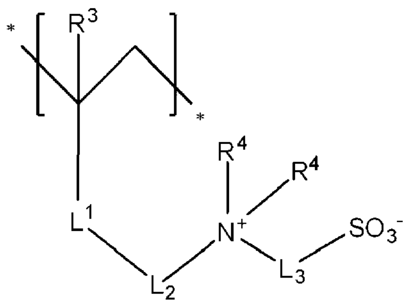

;

Chemical Formula 1-3B:

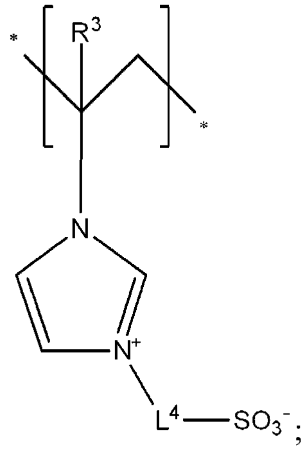

wherein in Chemical Formulae 1-3A and 1-3B,
$R^3$ are the same or different, and each independently comprise a hydrogen atom or a C1 to C20 alkyl group,
$R^4$ are the same or different, and each independently comprise a hydrogen atom or a C1 to C20 alkyl group,
$L^1$ comprises *-(C=O)-$NR^4$-$CH_2$-* or *-(C=O)-O-*, and
$L^2$ to $L^4$ each independently comprise a single bond, or a C1 to C20 alkylene group.

2. The electrode (10, 20) as claimed in claim 1, wherein the first polymer further comprises a fourth structural unit derived from an alkylene glycol-based monomer or a salt thereof, and represented by Chemical Formula 1-4A or Chemical Formula 1-4B,

Chemical Formula 1-4A:

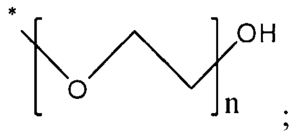

;

Chemical Formula 1-4B:

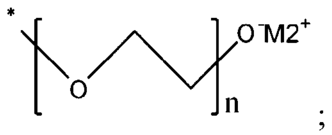

;

wherein in Chemical Formulae 1-4A and 1-4B,
M2 comprises an alkali metal, and
n is an integer in a range of 1 to 100.

3. The electrode (10, 20) as claimed in claim 1 or 2, wherein the first carbon nanostructure comprises at least one of carbon nanotube (CNT), carbon nanofiber (CNF), polyacetylene, graphene nanoribbon (GNR), graphene sheet, fullerene, nanodiamond, mesoporous carbon, amorphous carbon, carbon quantum dots, nanoporous carbon, carbon black, nanohorn, and vitreous carbon; and/or

wherein an amount of the first polymer is in a range of about 40 wt% to about 80 wt% relative to a total weight of the first composite conductive material, and/or
wherein an amount of the first composite conductive material in the electrode active material layer is in a range of about 0.1 wt% to about 5 wt%.

4. The electrode (10, 20) as claimed in any one of claims 1 to 3, wherein the active material is represented by Chemical Formula 3,

Chemical Formula 3: $Li_{x4}M^1_yM^2zM^3_{1-y-z}O_{2-a}X_a$

wherein in Chemical Formula 3,

0.55x4<1.8, $0 \leq a \leq 0.05$, $0 < y \leq 1$, $0 \leq z \leq 1$, and $0 \leq y+z \leq 1$,
$M^1$, $M^2$ and $M^3$ each independently comprise at least one of Ni, Co, Mn, Al, B, Ba, Ca, Ce, Cr, Fe, Mo, Nb, Si, Sr, Mg, Ti, V, W, Zr, La, and a combination thereof, and
X comprises one or more of F, S, P, or Cl.

**5.** The electrode (10, 20) as claimed in any one of claims 1 to 4, wherein the electrode active material layer further comprises a binder, and
wherein the binder comprises at least one of a rubber-based binder, an acrylate-based binder, a polyvinylidene fluoride-based binder, a polyvinylpyrrolidone-based binder, an acetate-based binder, a polyvinylalcohol-based binder, a cellulose-based binder, and a combination thereof.

**6.** An electrode (10, 20) for a rechargeable lithium battery (100), the electrode (10, 20) comprising:

an electrode current collector; and
an electrode active material layer on the electrode current collector,
wherein the electrode active material layer comprises an active material, a first composite conductive material, and a second composite conductive material,
wherein the first composite conductive material comprises a first carbon nanostructure and a first polymer chemically bonded to a surface of the first carbon nanostructure,
wherein the second composite conductive material comprises a second carbon nanostructure and a second polymer chemically bonded to a surface of the second carbon nanostructure,
wherein the first polymer and the second polymer are different from each other, and
wherein an ionic conductivity of the first polymer is greater than an ionic conductivity of the second polymer.

**7.** The electrode (10, 20) as claimed in claim 6, wherein a glass transition temperature ($T_g$) of the second polymer is lower than a glass transition temperature ($T_g$) of the first polymer; and/or
wherein the electrode active material layer is substantially free of a binder; and/or wherein at least one of the first and second carbon nanostructures comprises at least one of carbon nanotube (CNT), carbon nanofiber (CNF), polyacetylene, graphene nanoribbon (GNR), graphene sheet, fullerene, nanodiamond, mesoporous carbon, amorphous carbon, carbon quantum dots, nanoporous carbon, carbon black, nanohorn, and vitreous carbon.

**8.** The electrode (10, 20) as claimed in claim 6 or 7, wherein the first polymer comprises:

a first structural unit derived from a (meth)acrylic acid-based monomer or a salt thereof, and represented by Chemical Formula 1-1A or Chemical Formula 1-1B;
a second structural unit derived from a (meth)acrylonitrile-based monomer, and represented by Chemical Formula 1-2; and
a third structural unit derived from a zwitterionic monomer, and represented by Chemical Formula 1-3A or Chemical Formula 1-3B,

Chemical Formula 1-1A:

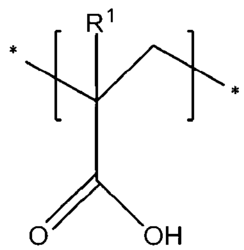

;

Chemical Formula 1-1B:

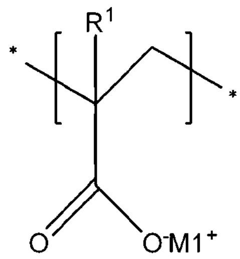

;

wherein in Chemical Formulae 1-1A and 1-1B,
$R^1$ are the same or different, and each independently comprise a hydrogen atom or a C1 to C20 alkyl group,
M 1 comprises an alkali metal,

Chemical Formula 1-2:

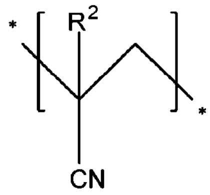

;

wherein in Chemical Formula 1-2,
$R^2$ comprises a hydrogen atom or a C1 to C20 alkyl group,

Chemical Formula 1-3A:

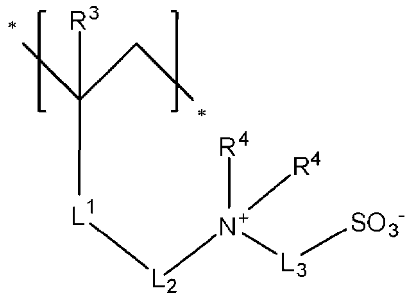

;

Chemical Formula 1-3B:

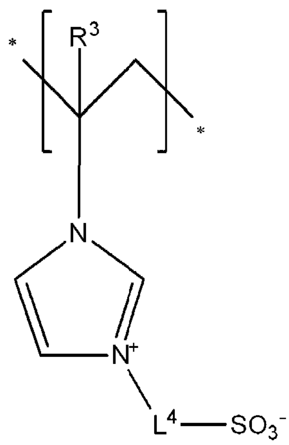

;

wherein in Chemical Formulae 1-3A and 1-3B,
$R^3$ are the same or different, and each independently comprise a hydrogen atom or a C1 to C20 alkyl group,
$R^4$ are the same or different, and each independently comprise a hydrogen atom or a C1 to C20 alkyl group,
$L^1$ comprises *-(C=O)-NR$^4$-CH$_2$-* or *-(C=O)-O-*, and
$L^2$ to $L^4$ each independently comprise a single bond, or a C1 to C20 alkylene group.

**9.** The electrode (10, 20) as claimed in claim 8, wherein the first polymer further comprises a fourth structural unit derived from an alkylene glycol-based monomer or a salt thereof, and represented by Chemical Formula 1-4A or Chemical Formula 1-4B,

Chemical Formula 1-4A:

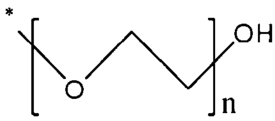

;

Chemical Formula 1-4B:

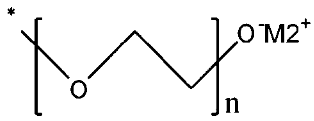

;

wherein in Chemical Formulae 1-4A and 1-4B,
M2 comprises an alkali metal, and
n is an integer in a range of 1 to 100.

**10.** The electrode (10, 20) as claimed in any one of claims 6 to 9, wherein the second polymer comprises at least one of polyvinyl alcohol (PVA), polyacrylonitrile (PAN), polyacrylic acid (PAA), polyethylene (PE), polyethylene glycol (PEG), polyimide (PI) and polyacrylamide (PAM), polystyrene (PS), polyurethane (PU), polyvinyl butyral (PVB), polyvinyl pyrrolidine (PVP), and a combination thereof.

**11.** The electrode (10, 20) as claimed in any one of claims 6 to 10, wherein the second polymer comprises at least one of a fifth structural unit represented by Chemical Formula 2-1, and a sixth structural unit represented by Chemical Formula 2-2,

Chemical Formula 2-1:

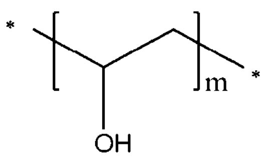

;

Chemical Formula 2-2:

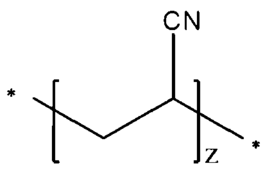

;

wherein in Chemical Formulae 2-1 and 2-2, m and z are each an integer in a range of 1 to 100.

**12.** The electrode (10, 20) as claimed in any one of claims 6 to 11, wherein an amount of the first polymer is in a range of about 40 wt% to about 80 wt% relative to a total weight of the first composite conductive material,

wherein an amount of the second polymer is in a range of about 40 wt% to about 80 wt% relative to a total weight of the second composite conductive material,
wherein an amount of the first composite conductive material in the electrode active material layer is in a range of about 0.1 wt% to about 5 wt%, and/or
wherein an amount of the second composite conductive material in the electrode active material layer is in a range of about 0.1 wt% to about 5 wt%.

**13.** The electrode (10, 20) as claimed in any one of claims 6 to 12, wherein an amount ratio of the first composite conductive material and the second composite conductive material in the electrode active material layer is in a range of about 7:3 to about 3:7.

**14.** A method for manufacturing an electrode for a rechargeable lithium battery, the method comprising:

providing an electrode current collector; and
forming an electrode active material layer on the electrode current collector,
wherein the electrode active material layer comprises an active material and a first composite conductive material, and
wherein preparing the first composite conductive material comprises:

introducing a functional group to a surface of a first carbon nanostructure; and
preparing a first mixture by mixing a first polymer and the first carbon nanostructure having the functional group,
wherein the first polymer comprises at least one of:

a first structural unit derived from a (meth)acrylic acid-based monomer or a salt thereof, and represented by Chemical Formula 1-1A or Chemical Formula 1-1B;
a second structural unit derived from a (meth)acrylonitrile-based monomer, and represented by Chemical Formula 1-2;
a third structural unit derived from a zwitterionic monomer and represented by Chemical Formula 1-3A or Chemical Formula 1-3B; and
a fourth structural unit derived from an alkylene glycol-based monomer or a salt thereof, and represented by Chemical Formula 1-4A or Chemical Formula 1-4B;

Chemical Formula 1-1A:

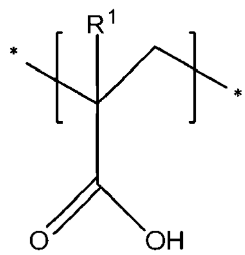
;

Chemical Formula 1-1B:

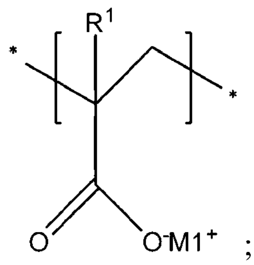

wherein in Chemical Formulae 1-1A and 1-1B,
$R^1$ are the same or different, and each independently comprise a hydrogen atom, or a C1 to C20 alkyl group, and M1 comprises an alkali metal,

Chemical Formula 1-2:

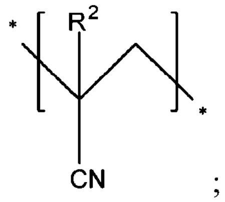

wherein in Chemical Formula 1-2,
$R^2$ comprises a hydrogen atom or a C1 to C20 alkyl group,

Chemical Formula 1-3A:

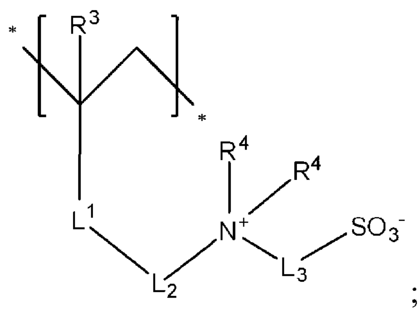

Chemical Formula 1-3B:

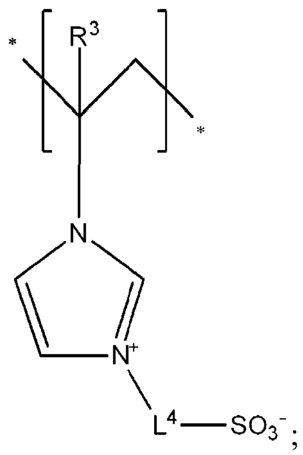

wherein in Chemical Formulae 1-3A and 1-3B,
$R^3$ are the same or different, and each independently comprise a hydrogen atom or a C1 to C20 alkyl group,
$R^4$ are the same or different, and each independently comprise a hydrogen atom or a C1 to C20 alkyl group,
$L^1$ comprises *-(C=O)-NR$^4$-CH$_2$-* or *-(C=O)-O-*, and
$L^2$ to $L^4$ each independently comprise a single bond or a C1 to C20 alkylene group,

Chemical Formula 1-4A:

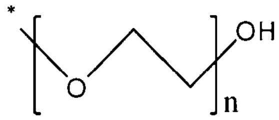

;

Chemical Formula 1-4B:

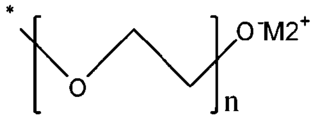

;

wherein in Chemical Formulae 1-4A and 1-4B,
M2 comprises an alkali metal, and
n is an integer in a range of 1 to 100.

**15.** The method as claimed in claim 14, wherein the first composite conductive material comprises the first carbon nanostructure and the first polymer chemically bonded to the surface of the first carbon nanostructure; and/or

further comprising adding a second composite conductive material to the electrode active material layer, and wherein preparing the second composite conductive material comprises:

introducing a functional group to a surface of a second carbon nanostructure; and
preparing a second mixture by mixing a second polymer and the second carbon nanostructure having the functional group,
preferably wherein the second composite conductive material comprises the second carbon nanostructure and the second polymer chemically bonded to the surface of the second carbon nanostructure, and wherein the second polymer comprises at least one of a fifth structural unit represented by Chemical Formula 2-1, or a sixth structural unit represented by Chemical Formula 2-2,

Chemical Formula 2-1:

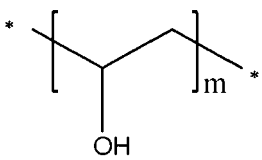

;

Chemical Formula 2-2:

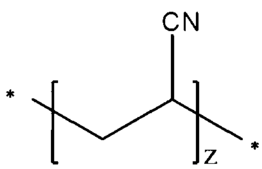

;

wherein in Chemical Formulae 2-1 and 2-2, m and z are each an integer in a range of 1 to 100.

FIG. 1

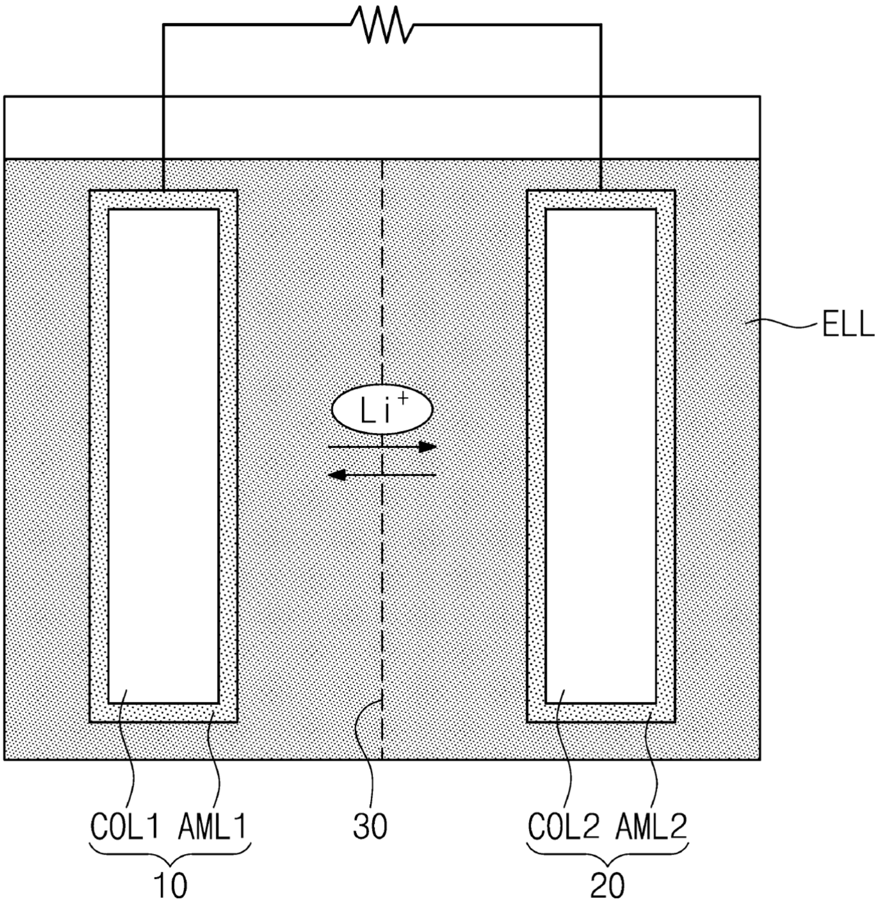

FIG. 2

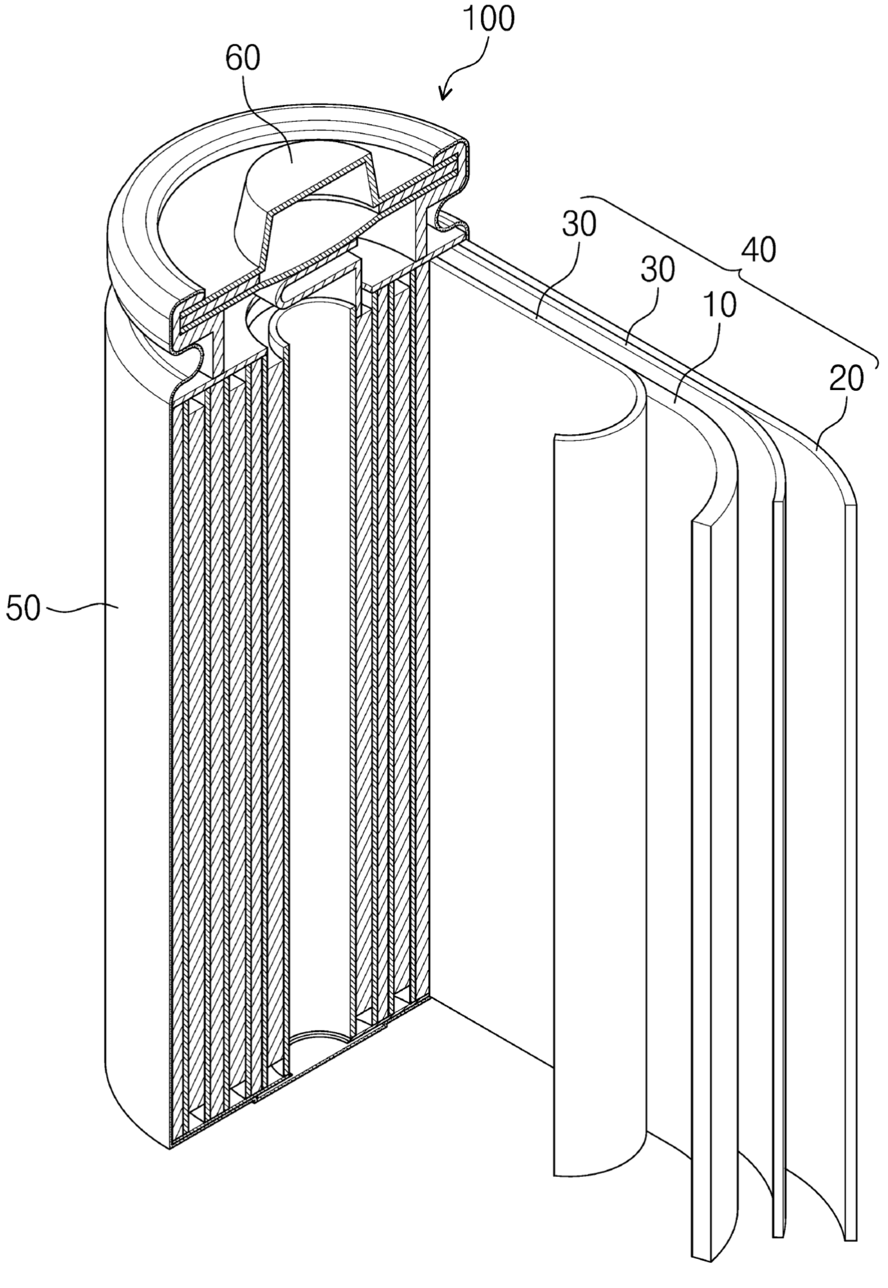

FIG. 3

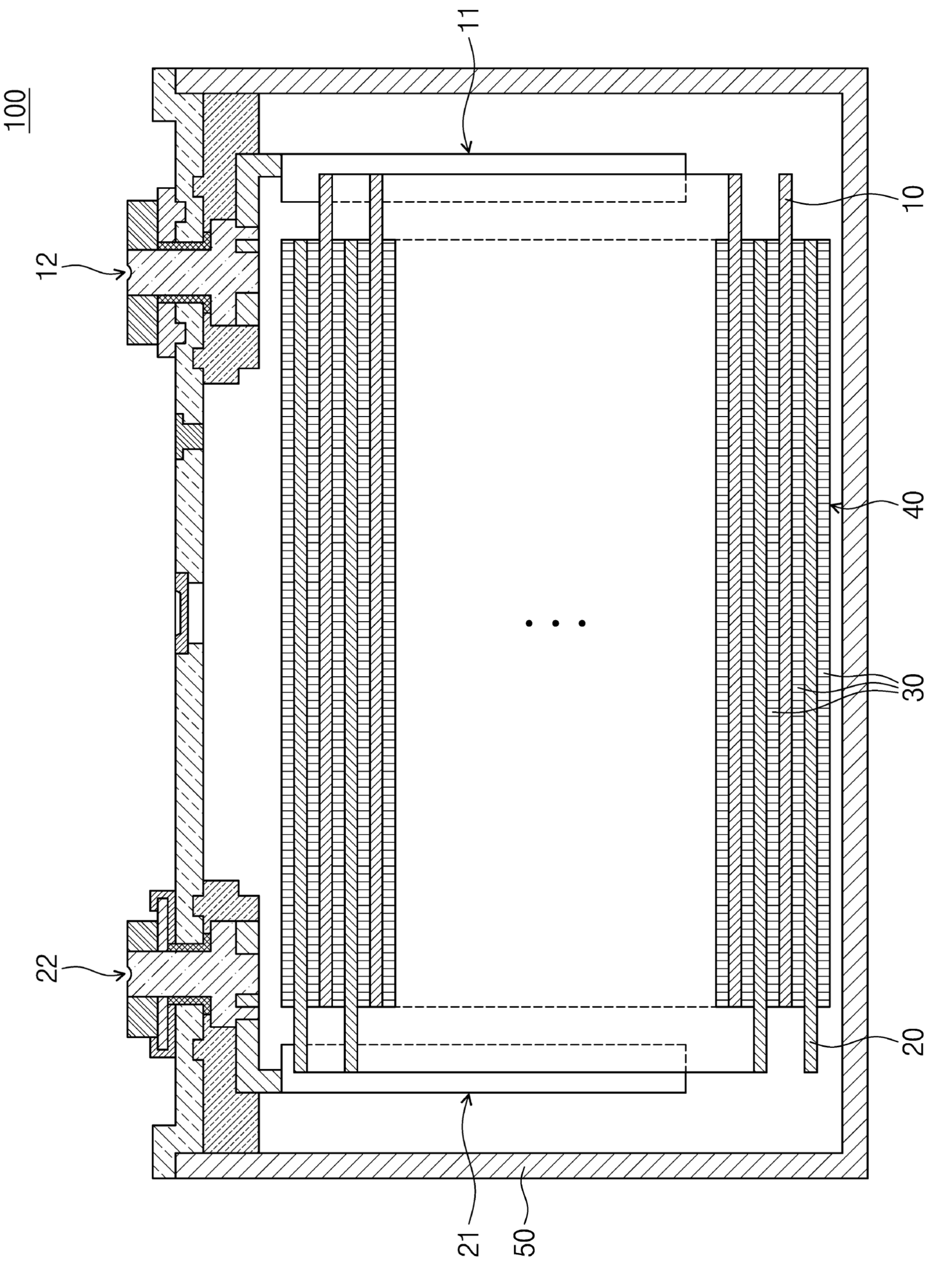

FIG. 4

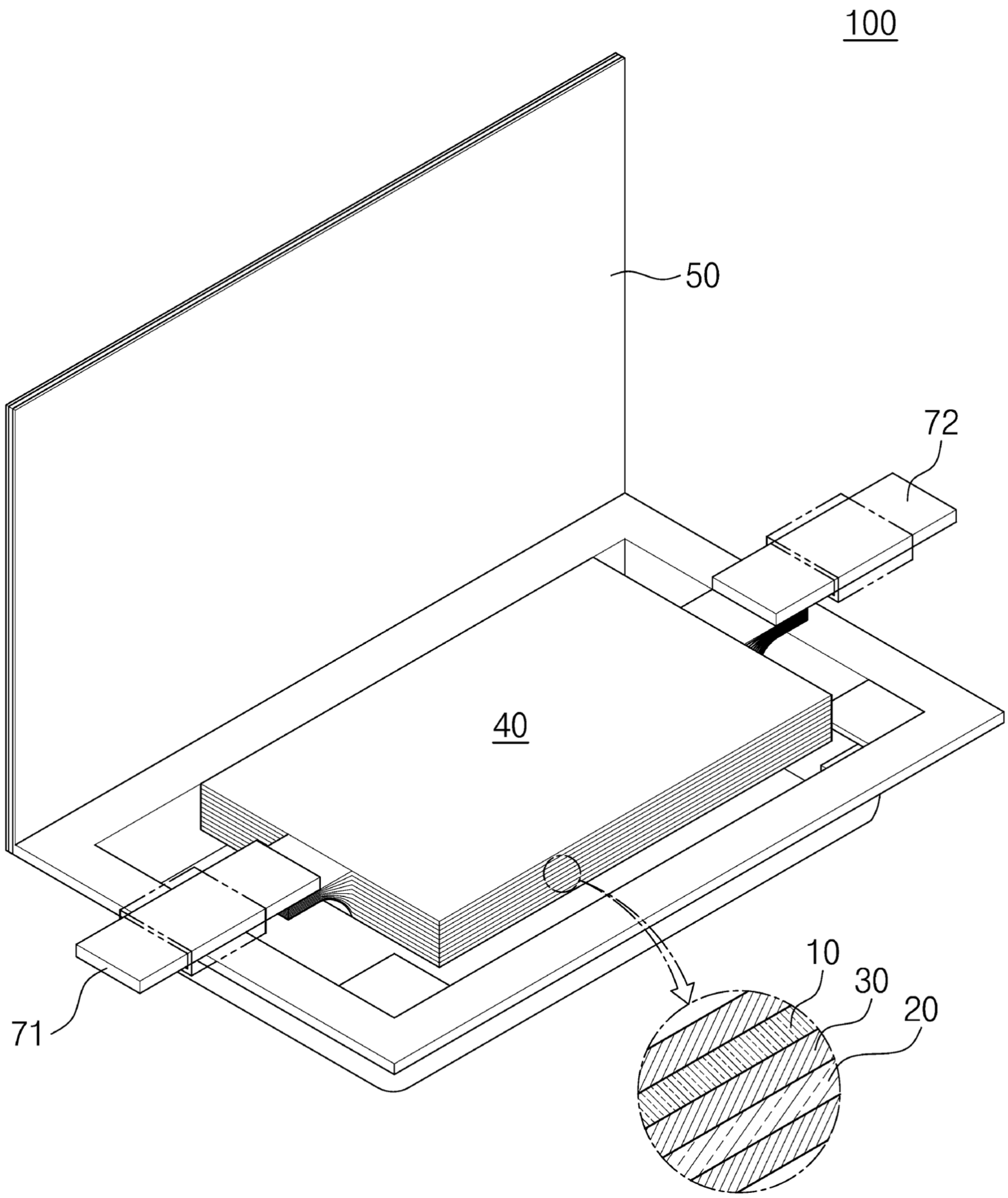

FIG. 5

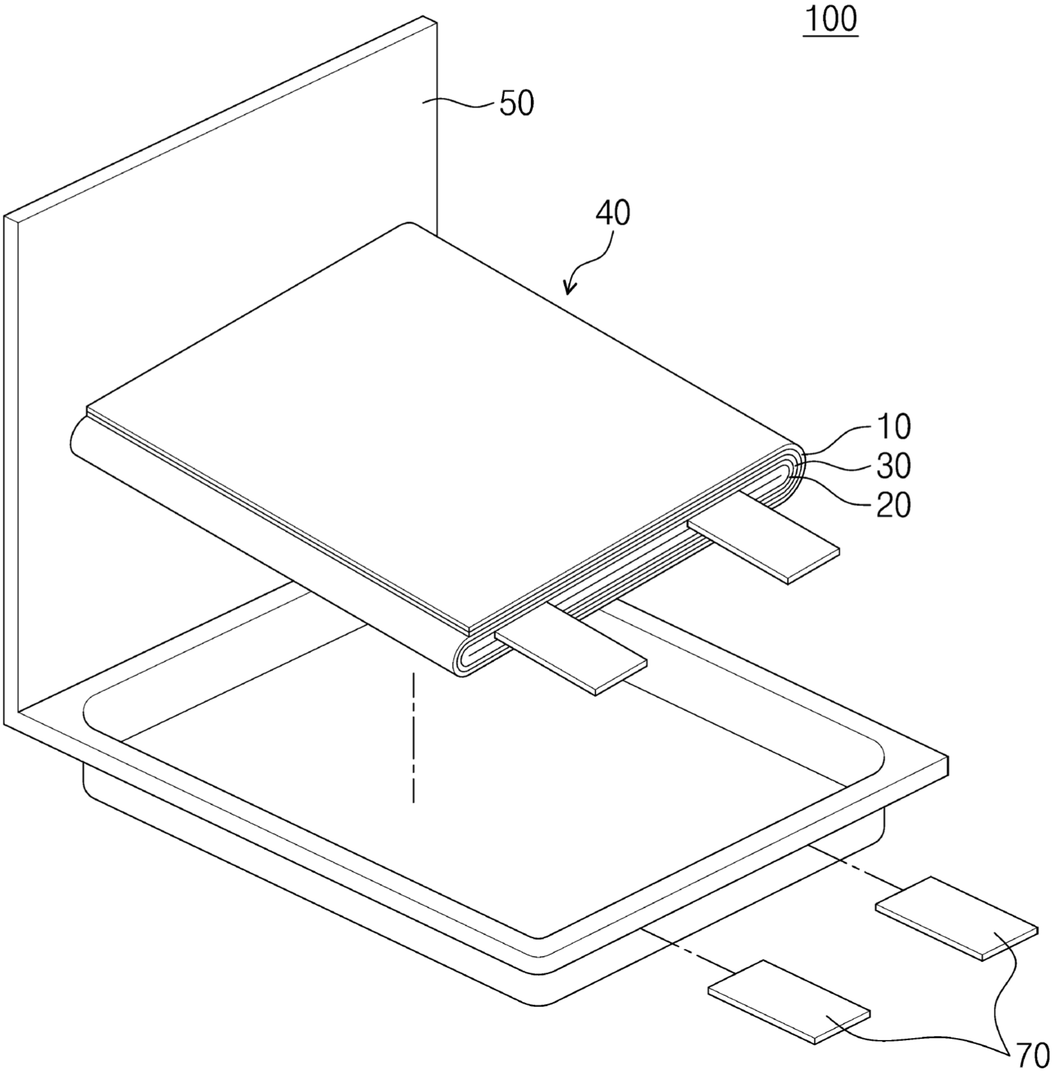

FIG. 6

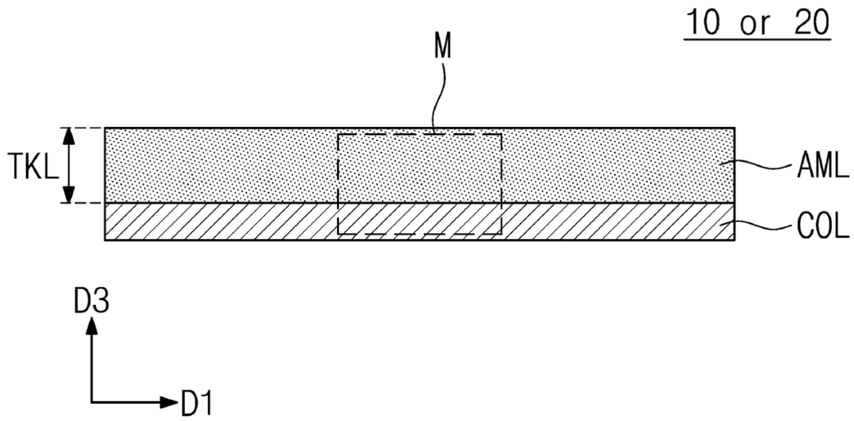

FIG. 7A

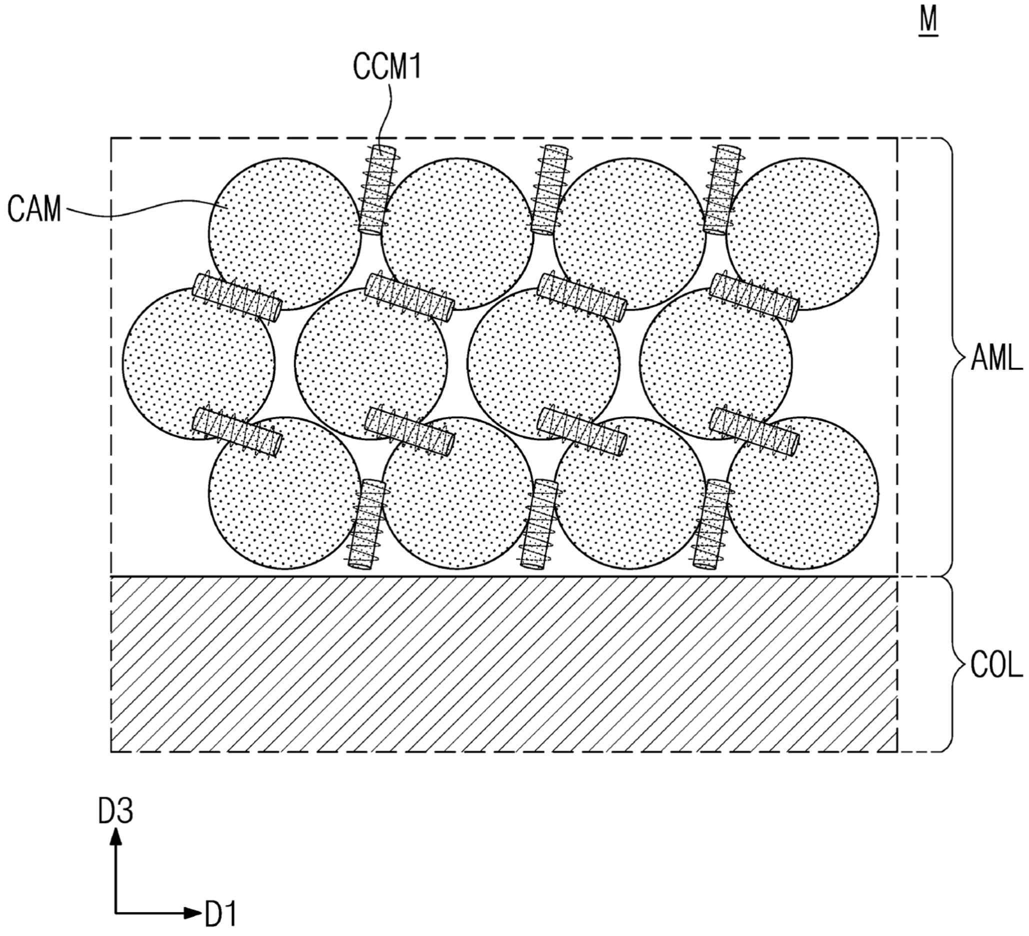

FIG. 7B

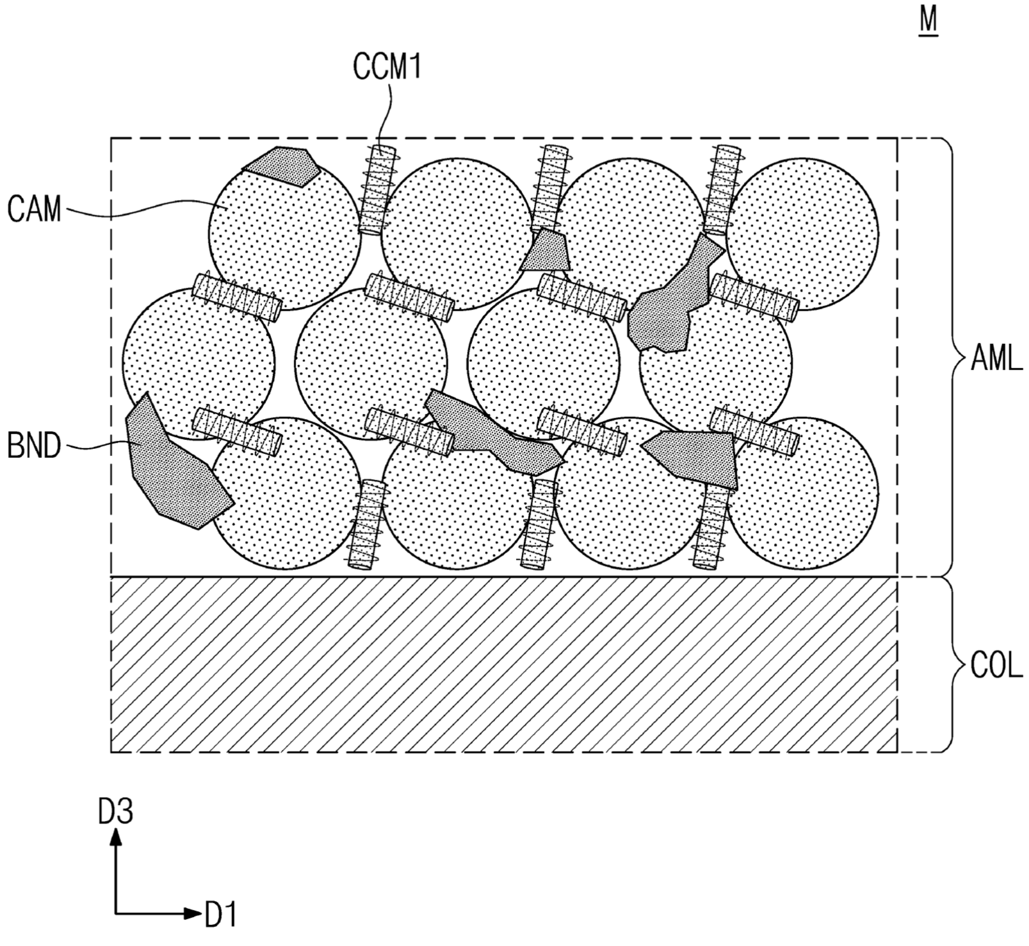

FIG. 7C

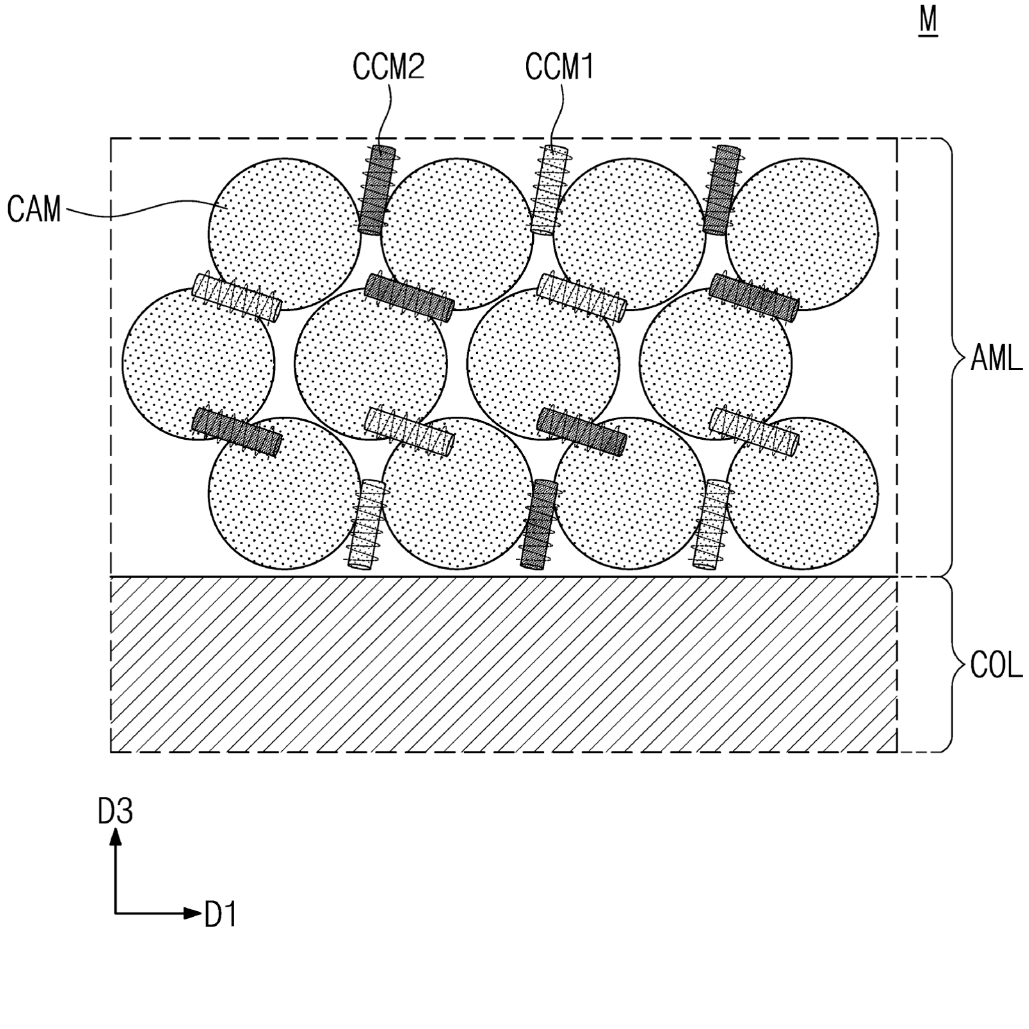

FIG. 8

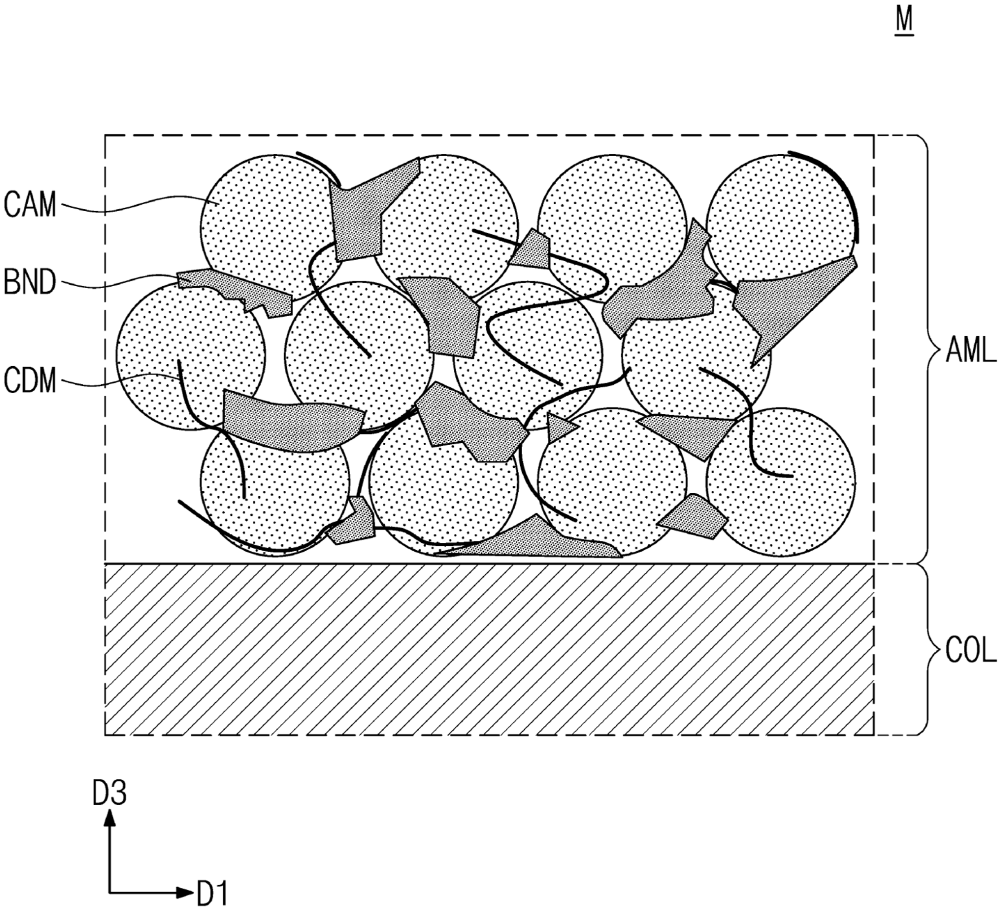


FIG. 9

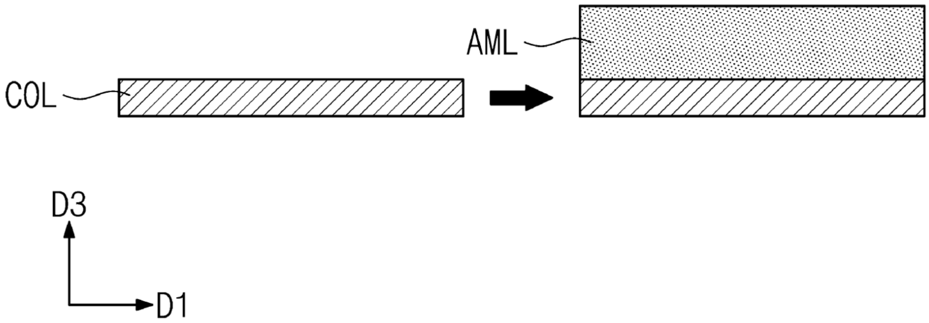

FIG. 10

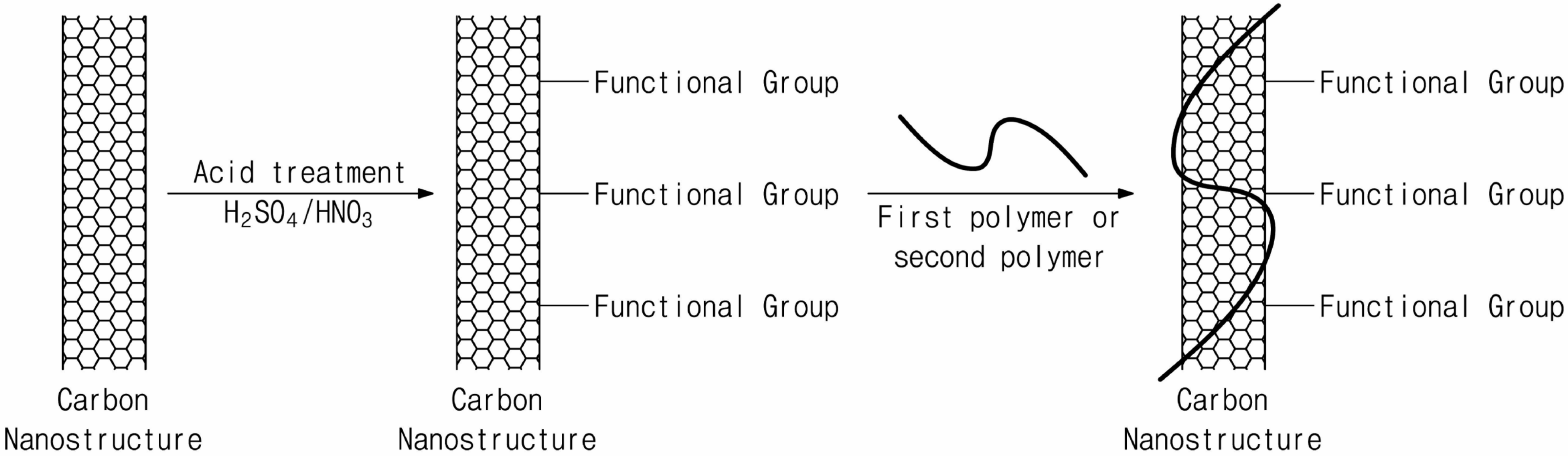


FIG. 11

[SE,x200,000]

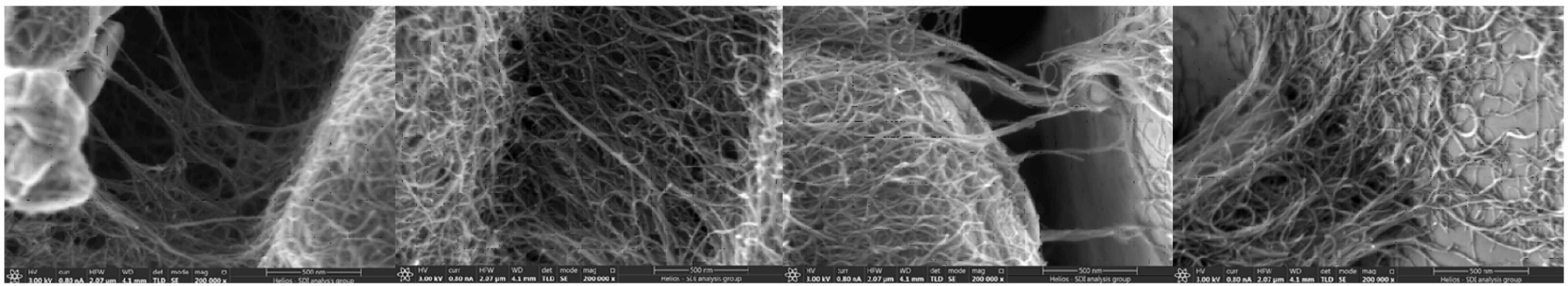

FIG. 12

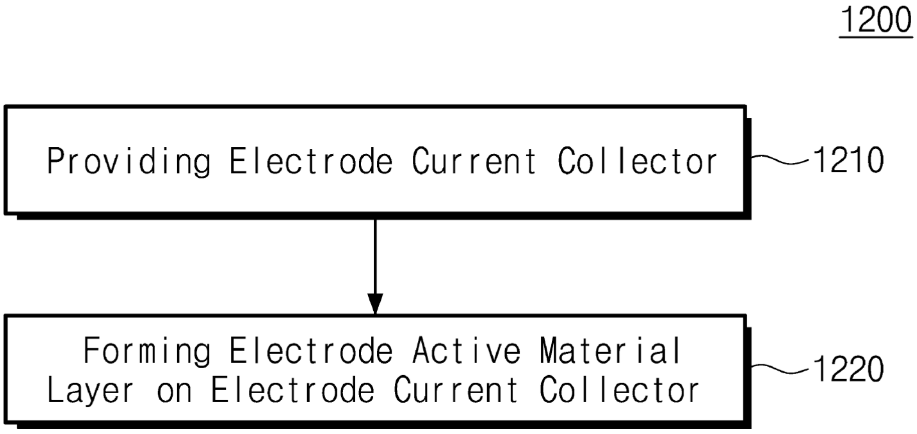
1200
Providing Electrode Current Collector
1210
Forming Electrode Active Material Layer on Electrode Current Collector
1220

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240183431